(19)

Europäisches
Patentamt
European
Patent Office
Office européen
des brevets

(11) **EP 2 418 755 A2**

(12) **EUROPEAN PATENT APPLICATION**

(43) Date of publication:
**15.02.2012 Bulletin 2012/07**

(51) Int Cl.:
*H02J 17/00* (2006.01)

(21) Application number: **11184066.6**

(22) Date of filing: **11.06.2007**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **27.03.2007 US 908383 P
28.03.2007 US 908666 P**

(62) Document number(s) of the earlier application(s) in
accordance with Art. 76 EPC:
**07784396.9 / 2 130 287**

(71) Applicant: **Massachusetts Institute of Technology
Cambridge, MA 02139 (US)**

(72) Inventors:
• **Karalis, Aristeidis
Boston, Massachusetts 02111 (US)**

• **Kurs, Andre B.
Chestnut Hill, Massachusetts 02467 (US)**
• **Moffatt, Robert
Reston, Virginia 20191 (US)**
• **Joannopoulos, John D.
Belmont, Massachusetts 02478 (US)**
• **Fisher, Peter H.
Cambridge, Massachusetts 02141 (US)**

(74) Representative: **Peterreins, Frank
Fish & Richardson P.C.
Highlight Business Towers
Mies-van-der-Rohe-Strasse 8
80807 München (DE)**

Remarks:
This application was filed on 06-10-2011 as a
divisional application to the application mentioned
under INID code 62.

(54) **Wireless energy transfer**

(57) Disclosed is an apparatus for use in wireless energy transfer, which includes a first resonator structure configured to transfer energy non-radiatively with a second resonator structure over a distance greater than a characteristic size of the second resonator structure. The non-radiative energy transfer is mediated by a coupling of a resonant field evanescent tail of the first resonator structure and a resonant field evanescent tail of the second resonator structure.

FIG. 1

## Description

## CROSS-REFERENCE TO RELATED APPLICATIONS

This provisional application is related to U.S. Patent Application 60/908,383, filed March 27, 2007, U.S. Patent Application 11/481,077 filed July ,7, 2006 and U.S. Provisional Patent Application 60/698,442, filed July 12, 2005. Each of U.S. Patent Application 11/481,077 filed July ,7, 2006 and U.S. Provisional Patent Application 60/698,442, filed July 12, 2005 is incorporated herein by reference in its entirety.

## BACKGROUND

The disclosure relates to wireless energy transfer. Wireless energy transfer may for example, be useful in such applications as providing power to autonomous electrical or electronic devices.

Radiative modes of omni-directional antennas (which work very well for information transfer) are not suitable for such energy transfer, because a vast majority of energy is wasted into free space. Directed radiation modes, using lasers or highly-directional antennas, can be efficiently used for energy transfer, even for long distances (transfer distance $L_{TR4NS} \gg L_{DEV}$, where $L_{DEV}$ is the characteristic size of the device and/or the source), but require existence of an uninterruptible line-of-sight and a complicated tracking system in the case of mobile objects. Some transfer schemes rely on induction, but are typically restricted to very close-range ($L_{TR4NS} \ll L_{DEV}$) or low power (~mW) energy transfers.

The rapid development of autonomous electronics of recent years (e.g. laptops, cell-phones, house-hold robots, that all typically rely on chemical energy storage) has led to an increased need for wireless energy transfer.

## SUMMARY

The inventors have realized that resonant objects with coupled resonant modes having localized evanescent field patterns may be used for wireless non-radiative energy transfer. Resonant objects tend to couple, while interacting weakly with other off-resonant environmental objects. Typically, using the techniques described below, as the coupling increases, so does the transfer efficiency. In some embodiments, using the below techniques, the energy-transfer rate can be larger than the energy-loss rate. Accordingly, efficient wireless energy-exchange can be achieved between the resonant objects, while suffering only modest transfer and dissipation of energy into other off-resonant objects. The nearly-omnidirectional but stationary (non-lossy) nature of the near field makes this mechanism suitable for mobile wireless receivers. Various embodiments therefore have a variety of possible applications including for example, placing a source (e.g. one connected to the wired electricity network) on the ceiling of a factory room, while devices (robots, vehicles, computers, or similar) are roaming freely within the room. Other applications include power supplies for electric-engine buses and/or hybrid cars and medical implantable devices.

In some embodiments, resonant modes are so-called magnetic resonances, for which most of the energy surrounding the resonant objects is stored in the magnetic field; i.e. there is very little electric field outside of the resonant objects. Since most everyday materials (including animals, plants and humans) are non-magnetic, their interaction with magnetic fields is minimal. This is important both for safety and also to reduce interaction with the extraneous environmental objects.

In one aspect, an apparatus is disclosed for use in wireless energy transfer, which includes a first resonator structure configured to transfer energy non-radiatively with a second resonator structure over a distance $D$ greater than a characteristic size $L_2$ of the second resonator structure. The non-radiative energy transfer is mediated by a coupling of a resonant field evanescent tail of the first resonator structure and a resonant field evanescent tail of the second resonator structure. In some embodiments, $D$ is also greater than one or more of: a characteristic size $L_1$ of the first resonator structure, a characteristic width of the first resonator structure, and a characteristic thickness of the first resonator structure. The apparatus may include any of the following features alone or in combination.

In some embodiments, the first resonator structure is configured to transfer energy to the second resonator structure. In some embodiments, the first resonator structure is configured to receive energy from the second resonator structure. In some embodiments, the apparatus includes the second resonator structure.

In some embodiments, the first resonator structure has a resonant frequency $\omega_1$, a Q-factor $Q_1$, and a resonance width $\Gamma_1$, the second resonator structure has a resonant frequency $\omega_2$, a Q-factor $Q_2$, and a resonance width $\Gamma_2$, and the non-radiative transfer has a rate $\kappa$. In some embodiments the frequencies $\omega_1$ and $\omega_2$ are about within the narrower of the resonant widths $\Gamma_1$ and $\Gamma_2$.

In some embodiments $Q_1 > 100$ and $Q_2 > 100$, $Q_1 > 200$ and $Q_2 > 200$, $Q_1 > 500$ and $Q_2 > 500$, $Q_1 > 1000$ and $Q_2 > 1000$. In some embodiments, $Q_1 > 200$ or $Q_2 > 200$, $Q_1 > 500$ or $Q_2 > 500$. $Q_1 > 1000$ or $Q_2 > 1000$.

In some embodiments, the coupling to loss ratio $\dfrac{\kappa}{\sqrt{\Gamma_1\Gamma_2}} > 0.5$, $\dfrac{\kappa}{\sqrt{\Gamma_1\Gamma_2}} > 1$, $\dfrac{\kappa}{\sqrt{\Gamma_1\Gamma_2}} > 2$, or

$$\dfrac{\kappa}{\sqrt{\Gamma_1\Gamma_2}} > 5.$$

In some embodiments, $D/L_2$ may be as large as 2, as large as 3, as large as 5, as large as 7, as large as 10.

In some embodiments, $Q_1 > 1000$, $Q_2 > 1000$, and the coupling to loss ratio $\dfrac{\kappa}{\sqrt{\Gamma_1\Gamma_2}} > 10$.

In some embodiments, $Q_1 > 1000$, $Q_2 > 1000$, and coupling to loss ratio $\dfrac{\kappa}{\sqrt{\Gamma_1\Gamma_2}} > 25$.

In some embodiments, $Q_1 > 1000$, $Q_2 > 1000$, and the coupling to loss ratio $\dfrac{\kappa}{\sqrt{\Gamma_1\Gamma_2}} > 40$.

In some embodiments, the energy transfer operates with an efficiency $\eta_w$ greater than about 1%, greater than about 10%, greater than about 20%, greater than about 30%, or greater than about 80%.
In some embodiments, the energy transfer operates with a radiation loss $\eta_{rad}$ less that about 10%. In some such embodiments the coupling to loss ratio $\dfrac{\kappa}{\sqrt{\Gamma_1\Gamma_2}} \geq 0.1$.

In some embodiments, the energy transfer operates with a radiation loss $\eta_{rad}$ less that about 1%. In some such embodiments, the coupling to loss ratio $\dfrac{\kappa}{\sqrt{\Gamma_1\Gamma_2}} \geq 1$.

In some embodiments, in the presence of a human at distance of more than 3cm from the surface of either resonant object, the energy transfer operates with a loss to the human $\eta_h$ of less than about 1%. In some such embodiments the coupling to loss ratio $\dfrac{\kappa}{\sqrt{\Gamma_1\Gamma_2}} \geq 1$.

In some embodiments, in the presence of a human at distance of more than 10cm from the surface of either resonant object, the energy transfer operates with a loss to the human $\eta_h$ of less than about 0.2%. In some such embodiments the coupling to loss ratio $\dfrac{\kappa}{\sqrt{\Gamma_1\Gamma_2}} \geq 1$.

In some embodiments, during operation, a power source coupled to the first or second resonator structure drives the resonator structure at a frequency $f$. In some embodiments, the apparatus further includes the power source. In some embodiments, $f$ is about the optimum efficiency frequency.
In some embodiments, $f$ is about 50 GHz or less, about 1 GHz or less, about 100 MHz or less, about 10 MHz or less. In some embodiments, about 1 MHz or less, about 100 KHz or less, or about 10 kHz or less. In some embodiments, $f$ is about 50 GHz or greater, about 1 GHz or greater, about 100 MHz or greater, about 10 MHz or greater, about 1 MHz or greater, about 100 kHz or greater, or about 10 kHz or greater.
In some embodiments, during operation, one of the resonator structures receives a usable power $P_w$ from the other resonator structure. In some embodiments, $P_w$ is greater than about 0.01 Watt, greater than about 0.1 Watt, greater than about 1 Watt, or greater than about 10 Watt.
In some embodiments, $Q_\kappa = \omega/2\kappa$ is less than about 50, less than about 200, less than about 500, or less than about 1000.
In some embodiments, $D/L_2$ is as large as 3, as large as 5, as large as 7, or as large as In some embodiments, one of the first and second resonator structures include capacitively loaded conductive coils. In some embodiments, both of the first and second resonator structures include capacitively loaded conductive coils. In some such embodiments, during operation, one of the resonator structures receives a usable power $P_w$ from the other resonator structure, an

electrical current $I_s$ flows in the resonator structure which is transferring energy to the other resonant structure, and the ratio $\frac{I_s}{\sqrt{P_w}}$ is less than about 5 $Amps/\sqrt{Watts}$, or less than about 2 $Amps/\sqrt{Watts}$. In some embodiments, during operation, one of the resonator structures receives a usable power $P_w$ from the other resonator structure, a voltage difference $V_s$ appears across the capacitive load of the first resonator structure $V_s$, and the ratio $\frac{V_s}{\sqrt{P_w}}$ is less than about 2000 $Volts/\sqrt{Watts}$ or less than about 4000 $Volts/\sqrt{Watts}$.

In some embodiments, both of the first and second resonator structures include capacitively loaded conductive coils, and $Q_1 > 200$ and $Q_2 > 200$. In some embodiments, the characteristic size $L_R$ of the resonator structure receiving energy from the other resonator structure is less than about 1 cm and the width of the conductive coil of said object is less than about 1mm, and, during operation, a power source coupled to the first or second resonator structure drives the resonator structure at a frequency $f$. In some such embodiments, $f$ is about 380MHz. In some embodiments, the coupling to loss ratio $\frac{\kappa}{\sqrt{\Gamma_1\Gamma_2}} \geq 14.9$, $\frac{\kappa}{\sqrt{\Gamma_1\Gamma_2}} \geq 3.2$, $\frac{\kappa}{\sqrt{\Gamma_1\Gamma_2}} \geq 1.2$, or $\frac{\kappa}{\sqrt{\Gamma_1\Gamma_2}} \geq 0.4$.

In some embodiments, the characteristic size of the resonator structure receiving energy from the other resonator structure $L_R$ is less than about 10 cm and the width of the conductive coil of said object is less than about 2mm, and, during operation, a power source coupled to the first or second resonator structure drives the resonator structure at a frequency $f$. In some embodiments, $f$ is about 43 MHz. In some embodiments, the coupling to loss ratio $\frac{\kappa}{\sqrt{\Gamma_1\Gamma_2}} \geq 15.9$, $\frac{\kappa}{\sqrt{\Gamma_1\Gamma_2}} \geq 4.3$, $\frac{\kappa}{\sqrt{\Gamma_1\Gamma_2}} \geq 1.8$, or $\frac{\kappa}{\sqrt{\Gamma_1\Gamma_2}} \geq 0.7$. In some embodiments, the characteristic size $L_R$ of the resonator structure receiving energy from the other resonator structure is less than about 30 cm and the width of the conductive coil of said object is less than about 2cm, and, during operation, a power source coupled to the first or second resonator structure drives the resonator structure at a frequency $f$. In some such embodiments, $f$ is about 9 MHz. In some embodiments, the coupling to loss ratio $\frac{\kappa}{\sqrt{\Gamma_1\Gamma_2}} \geq 67.4$, $\frac{\kappa}{\sqrt{\Gamma_1\Gamma_2}} \geq 17.8$, $\frac{\kappa}{\sqrt{\Gamma_1\Gamma_2}} \geq 7.1$, or $\frac{\kappa}{\sqrt{\Gamma_1\Gamma_2}} \geq 2.7$. In some embodiments, the characteristic size of the resonator structure receiving energy from the other resonator structure $L_R$ is less than about 30 cm and the width of the conductive coil of said obj ect is less than about 2mm, and, during operation, a power source coupled to the first or second resonator structure drives the resonator structure at a frequency $f$. In some embodiments, $f$ is about 17 MHz. In some embodiments, the coupling to loss ratio $\frac{\kappa}{\sqrt{\Gamma_1\Gamma_2}} \geq 6.3$, $\frac{\kappa}{\sqrt{\Gamma_1\Gamma_2}} \geq 1.3$, $\frac{\kappa}{\sqrt{\Gamma_1\Gamma_2}} \geq 0.5$., or $\frac{\kappa}{\sqrt{\Gamma_1\Gamma_2}} \geq 0.2$. In some embodiments, the characteristic size $L_R$ of the resonator structure receiving energy from the other resonator structure is less than about 1m, and the width of the conductive coil of said object is less than about 2mm, and, during operation, a power source coupled to the first or second resonator structure drives the resonator structure at a frequency $f$. In some embodiments, $f$ is about 5MHz.

In some embodiments, the coupling to loss ratio $\frac{\kappa}{\sqrt{\Gamma_1\Gamma_2}} \geq 6.8$, $\frac{\kappa}{\sqrt{\Gamma_1\Gamma_2}} \geq 1.4$, $\frac{\kappa}{\sqrt{\Gamma_1\Gamma_2}} \geq 0.5$, $\frac{\kappa}{\sqrt{\Gamma_1\Gamma_2}} \geq 0.2$. In some such embodiments, $D/L_R$ is as large as about 3, about 5, about 7, or about 10.

In some embodiments, one or both of the first and second resonator structures include dielectric disks. In some embodiments, the characteristic size of the resonator structure receiving energy from the other resonator structure is $L_R$ and the real part of the permittivity of said resonator structure ε is less than about 150. In some such embodiments,

the coupling to loss ratio $\dfrac{\kappa}{\sqrt{\Gamma_1\Gamma_2}} \geq 42.4$, $\dfrac{\kappa}{\sqrt{\Gamma_1\Gamma_2}} \geq 6.5$, $\dfrac{\kappa}{\sqrt{\Gamma_1\Gamma_2}} \geq 2.3$, $\dfrac{\kappa}{\sqrt{\Gamma_1\Gamma_2}} \geq 0.5$. In some embodiments, the characteristic size $L_R$ of the resonator structure receiving energy from the other resonator structure is and the real part of the permittivity of said resonator structure ε is less than about In some embodiments, the coupling to loss ratio

$\dfrac{\kappa}{\sqrt{\Gamma_1\Gamma_2}} \geq 30.9$, $\dfrac{\kappa}{\sqrt{\Gamma_1\Gamma_2}} \geq 2.3$, or $\dfrac{\kappa}{\sqrt{\Gamma_1\Gamma_2}} \geq 0.5$. In some embodiments, the real part of the permittivity of the resonator structure configured to receiving energy from the other resonator structure ε is less than about 65.

In some embodiments, one of the first and second resonator structures include self resonant conducting wire coil. In some embodiments, both of the first and second resonator structures include self resonant conducting wire coils.

In some embodiments, one or more of the self resonant conductive wire coils include a wire of length *l* and cross section radius wound into a helical coil of radius *r*, height *h* and number of turns *N*. In some embodiments,

$$N = \sqrt{l^2 - h^2} / 2\pi r$$

In some embodiments, both of the first and second resonator structures include self resonant conducting wire coils , and $Q_1 > 200$ and $Q_2 > 200$.

In some embodiments, for each resonant structure *r* is about 30cm, *h* is about 20cm, *a* is about 3mm and *N* is about 5.25, and, during operation, a power source coupled to the first or second resonator structure drives the resonator structure at a frequency *f*. In some embodiments, *f* is about 10.6 MHz. In some embodiments, the coupling to loss ratio

$\dfrac{\kappa}{\sqrt{\Gamma_1\Gamma_2}} \geq 40$, $\dfrac{\kappa}{\sqrt{\Gamma_1\Gamma_2}} \geq 15$, or $\dfrac{\kappa}{\sqrt{\Gamma_1\Gamma_2}} \geq 5$, or $\dfrac{\kappa}{\sqrt{\Gamma_1\Gamma_2}} \geq 1$. In some embodiments $D/L_R$ is as large as about 2, 3, 5, or 8.

In some embodiments, the apparatus further includes an electrical or electronic device electrically coupled to the second resonator structure, such that the device can receive energy from the second resonator structure. In some embodiments device includes a robot (e.g. a conventional robot or a nano-robot), a mobile electronic device (e.g. a telephone, or computer, or laptop computer). In some embodiments, the device includes a medical device configured to be implanted in a patient (e.g. an artificial organ, or implant configured to deliver medicine).

In some embodiments, at least one of the first and second resonator structures includes one of: a dielectric disk, a dielectric object, a metallic object, a metallodielectric material, a plasmonic material, a capacitively loaded conducting coil, a self resonant conducting wire coil.

In some embodiments, the resonant fields are electromagnetic. In some embodiments, the resonant fields are acoustic. In some embodiments, one or more of the resonant fields include a whispering gallery mode of one of the resonant structures

In some embodiments, the resonant fields are primarily magnetic in the area outside of the resonant objects. In some embodiments, the ratio of the average electric field energy to average magnetic filed energy at a distance *p* from the closest resonant object is less than 0.01, or less than 0.1. In some embodiments, *Lc* is the characteristic size of the closest resonant object and *p/Lc* is less than 1.5, 3, 5, 7, or 10.

In some embodiments, at least one of the resonators has a quality factor greater than about 5000, or grater than about 10000.

In some embodiments, at least one of the resonators has a quality factor greater than about 10000.

In some embodiments, the apparatus also includes a third resonator structure configured to transfer energy non-radiatively with one or more of the first and second resonator structures,

where the non-radiative energy transfer between the third resonator structure and the one or more of the first and second resonator structures is mediated by a coupling of the resonant field evanescent tail of the one or more of the first and second resonator structures and a resonant field evanescent tail of the third resonator structure.

In some embodiments, the third resonator structure is configured to transfer energy to one or more of the first and second resonator structures.

In some embodiments, the first resonator structure is configured to receive energy from one or more of the first and second resonator structures.

In some embodiments, the first resonator structure is configured to receive energy from one of the first and second resonator structures and transfer energy to the other one of the first and second resonator structures.

In another aspect, a method of wireless energy is disclosed which transfer includes providing a first resonator structure; and transferring energy non-radiatively with a second resonator structure over a distance $D$ greater than a characteristic size $L_1$ of the first resonator structure and greater than a characteristic size $L_2$ of the second resonator structure. The non-radiative energy transfer is mediated by a coupling of a resonant field evanescent tail of the first resonator structure and a resonant field evanescent tail of the second resonator structure.

In some embodiments, the first resonator structure has a resonant frequency $\omega_1$, a Q-factor $Q_1$, and a resonance width $\Gamma_1$, the second resonator structure has a resonant frequency $\omega_2$, a Q-factor $Q_2$, and a resonance width $\Gamma_2$, and the non-radiative transfer has a rate $\kappa$. In some embodiments, the frequencies $\omega_1$ and $\omega_2$ are about within the narrower of the resonant widths $\Gamma_1$ and $\Gamma_2$. In some embodiments, the coupling to loss ratio $\dfrac{\kappa}{\sqrt{\Gamma_1 \Gamma_2}} > 1$. .

In another aspect, an apparatus is disclosed which includes a first resonator structure configured to transfer energy non-radiatively with a second resonator structure over a distance $D$ greater than a characteristic width $W_1$ of the first resonator structure and greater than a characteristic size $L_2$ of the second resonator structure The non-radiative energy transfer is mediated by a coupling of a resonant field evanescent tail of the first resonator structure and a resonant field evanescent tail of the second resonator structure. In some embodiments, the first resonator structure is configured to transfer energy to the second resonator structure. In some embodiments, the apparatus includes the second resonator structure. In some embodiments, the first resonator structure has a resonant frequency $\omega_1$, a Q-factor $Q_1$, and a resonance width $\Gamma_1$, the second resonator structure has a resonant frequency $\omega_2$, a Q-factor $Q_2$, and a resonance width $\Gamma_2$, and the non-radiative transfer has a rate $\kappa$. In some embodiments, the frequencies $\omega_1$ and $\omega_2$ are about within the narrower of the resonant widths $\Gamma_1$ and $\Gamma_2$. In some embodiments, the coupling to loss ratio $\dfrac{\kappa}{\sqrt{\Gamma_1 \Gamma_2}} > 1$.

In another aspect, an apparatus is disclosed for use in wireless information transfer which includes a first resonator structure configured to transfer information by transferring energy non-radiatively with a second resonator structure over a distance $D$ greater than a characteristic size $L_1$ of the first resonator structure and greater than a characteristic size $L_2$ of the second resonator structure. The non-radiative energy transfer is mediated by a coupling of a resonant field evanescent tail of the first resonator structure and a resonant field evanescent tail of the second resonator structure.

In some embodiments, the first resonator structure is configured to transfer energy to the second resonator structure. In some embodiments, the first resonator structure is configured to receive energy from the second resonator structure. In some embodiments the apparatus includes, the second resonator structure. In some embodiments, the first resonator structure has a resonant frequency $\omega_1$, a Q-factor $Q_1$, and a resonance width $\Gamma_1$, the second resonator structure has a resonant frequency $\omega_2$, a Q-factor $Q_2$, and a resonance width $\Gamma_2$, and the non-radiative transfer has a rate $\kappa$. In some embodiments, the frequencies $\omega_1$ and $\omega_2$ are about within the narrower of the resonant widths $\Gamma_1$ and $\Gamma_2$. In some embodiments, the coupling to loss ratio $\dfrac{\kappa}{\sqrt{\Gamma_1 \Gamma_2}} > 1$.

In another aspect, apparatus is disclosed for use in wireless energy transfer which includes a first resonator structure configured to transfer energy non-radiatively with a second resonator structure over a distance $D$ greater than a characteristic thickness $T_1$ of the first resonator structure and greater than a characteristic size $L_2$ of the second resonator structure. The non-radiative energy transfer is mediated by a coupling of a resonant field evanescent tail of the first resonator structure and a resonant field evanescent tail of the second resonator structure. In some embodiments, the first resonator structure is configured to transfer energy to the second resonator structure. In some embodiments, the apparatus includes the second resonator structure. In some embodiments, the first resonator structure has a resonant frequency $\omega_1$, a Q-factor $Q_1$, and a resonance width $\Gamma_1$, the second resonator structure has a resonant frequency $\omega_2$, a Q-factor $Q_2$, and a resonance width $\Gamma_2$, and the non-radiative transfer has a rate $\kappa$. In some embodiments, the frequencies $\omega_1$ and $\omega_2$ are about within the narrower of the resonant widths $\Gamma_1$ and $\Gamma_2$. In some embodiments, the coupling to loss ratio $\dfrac{\kappa}{\sqrt{\Gamma_1 \Gamma_2}} > 1$.

Some embodiments include a mechanism for, during operation, maintaining the resonant frequency of one or more of the resonant objects. In some embodiments, the feedback mechanism comprises a oscillator with a fixed frequency and is configured to adjust the resonant frequency of the one or more resonant objects to be about equal to the fixed frequency. In some embodiments, the feedback mechanism is configured to monitor an efficiency of the energy transfer, and adjust the resonant frequency of the one or more resonant objects to maximize the efficiency.

It is to be understood that the characteristic size of an object is equal to the radius of the smallest sphere which can fit around the entire object. The characteristic width of an object is the radius of the smallest possible circle that the object can pass through while traveling in a straight line. For example, the characteristic width of a cylindrical object is the radius of the cylinder. The characteristic thickness of an object is, when placed on a flat surface in any arbitrary configuration, the smallest possible height of the highest point of the object above a flat surface.

The distance $D$ over which the energy transfer between two resonant objects occurs is the distance between the respective center of the smallest spheres which can fit around the entirety of each object. However, when considering the distance between a human and a resonant object, the distance is to be measured from the outer surface of the human to the outer surface of the sphere.

As described in detail below, non-radiative energy transfer refers to energy transfer effected primarily through the localized near field, and, at most, secondarily through the radiative portion of the field.

It is to be understood that an evanescent tail of a resonant object is the slowly decaying non-radiative portion of a resonant field localized at the object. The decay may take any functional form including, for example, an exponential decay or power law decay.

The optimum efficiency frequency of a wireless energy transfer system is the frequency at which the figure of merit $\dfrac{\kappa}{\sqrt{\Gamma_1 \Gamma_2}}$ is maximized, all other factors held constant.

Resonant width ($\Gamma$) refers to the width of an object's resonance due to object's intrinsic losses (e.g. loss to absorption, radiation, etc.).

It is to be understood that a Q-factor is a factor that compares the time constant for decay of an oscillating system's amplitude to its oscillation period. For a given resonator mode with frequency and resonant width $\Gamma$, the Q-factor $Q = \omega/2\Gamma$.

It is to be understood that $Q_\kappa = \omega/2\kappa$

The non-radiative energy transfer rate $\kappa$ refers rate of energy transfer from one resonator to another. In the coupled mode description described below it is the coupling constant between the resonators

Unless otherwise defined, all technical and scientific terms used herein have the same meaning as commonly understood by one of ordinary skill in the art to which this invention belongs. In case of conflict with publications, patent applications, patents, and other references mentioned incorporated herein by reference, the present specification, including definitions, will control.

Various embodiments may include any of the above features, alone or in combination. Other features, objects, and advantages of the disclosure will be apparent from the following detailed description.

Other features, objects, and advantages of the disclosure will be apparent from the following detailed description.

## BRIEF DESCRIPTION OF THE DRAWINGS

Fig. 1 shows a schematic of a wireless energy transfer scheme.

Fig. 2 shows an example of a self-resonant conducting-wire coil.

Fig. 3 shows a wireless energy transfer scheme featuring two self-resonant conducting-wire coils

Fig. 4 shows an example of a capacitively loaded conducting-wire coil, and illustrates the surrounding field.

Fig. 5 shows a wireless energy transfer scheme featuring two capacitively loaded conducting-wire coils, and illustrates the surrounding field.

Fig. 6 shows an example of a resonant dielectric disk, and illustrates the surrounding field.

Fig. 7 shows a wireless energy transfer scheme featuring two resonant dielectric disks, and illustrates the surrounding field.

Fig. 8a and 8b shows a schematic for a frequency control mechanisms.

Fig. 9a through 9c illustrate a wireless energy transfer scheme in the presence of various extraneous objects.

Fig. 10 illustrates a circuit model for wireless energy transfer.

Fig. 11 illustrates the efficiency of a wireless energy transfer scheme.

Fig. 12 illustrates parametric dependences of a wireless energy transfer scheme.

Fig. 13 plots the parametric dependences of a wireless energy transfer scheme.

Fig. 14 is a schematic of an experimental system demonstrating wireless energy transfer.

Figs 15-17. Plot experiment results for the system shown schematically in Fig. 14.

## DETAILED DESCRIPTION

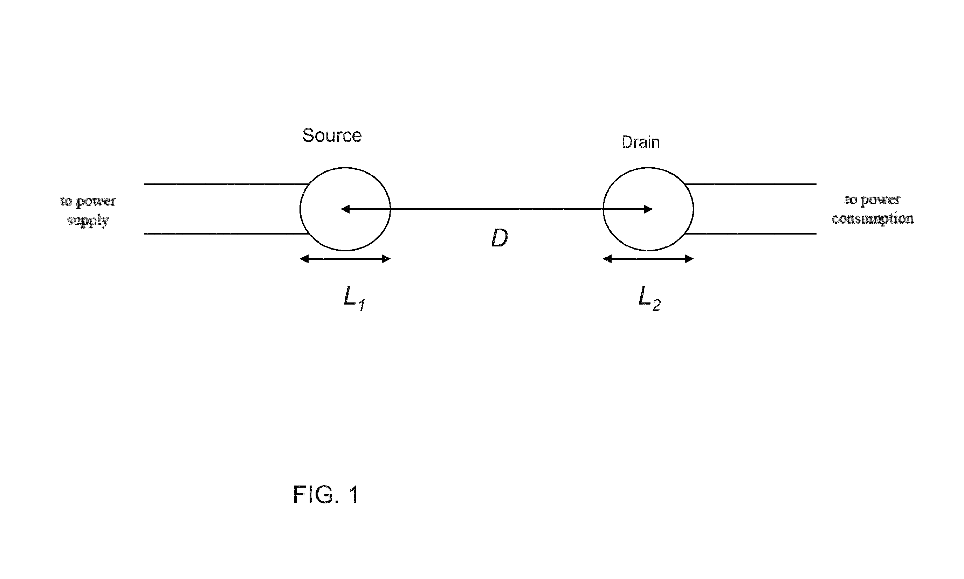

Fig. 1 shows a schematic that generally describes one embodiment of the invention, in which energy is transferred wirelessly between two resonant objects.

Referring to Fig. 1, energy is transferred, over a distance $D$, between a resonant source object having a characteristic size $L_1$ and a resonant device object of characteristic size $L_2$. Both objects are resonant objects. The source object is connected to a power supply (not shown), and the device object is connected to a power consuming device (e.g. a load resistor, not shown). Energy is provided by the power supply to the source object, transferred wirelessly and non-radiatively from the source object to the device object, and consumed by the power consuming device. The wireless non-radiative energy transfer is performed using the field (e.g. the electromagnetic field or acoustic field) of the system of two resonant objects. For simplicity, in the following we will assume that field is the electromagnetic field.

It is to be understood that while two resonant objects are shown in the embodiment of Fig. 1, and in many of the example below, other embodiments may feature 3 or more resonant objects. For example, in some embodiments a single source object can transfer energy to multiple device objects. In some embodiments energy may be transferred from a first device to a second, and then from the second device to the third, and so forth.

Initially, we present a theoretical framework for understanding non-radiative wireless energy transfer. Note however that it is to be understood that the scope of the disclosure is not bound by theory.

### Coupled Mode Theory

An appropriate analytical framework for modeling the resonant energy-exchange between two resonant objects) 1 and 2 is that of "coupled-mode theory" (CMT). The field of the system of two resonant objects 1 and 2 is approximated by $\mathbf{F}(\mathbf{r},t) \approx a_1(t)\mathbf{F}_1(\mathbf{r}) + a_2(t)\mathbf{F}_2(\mathbf{r})$, where $\mathbf{F}_{1,2}(\mathbf{r})$ are the eigenmodes of 1 and 2 alone, normalized to unity energy, and the field amplitudes $a_{1,2}(t)$ are defined so that $|a_{1,2}(t)|^2$ is equal to the energy stored inside the objects 1 and 2 respectively. Then, the field amplitudes can be shown to satisfy, to lowest order:

$$\frac{da_1}{dt} = -i\left(\omega_1 - i\Gamma_1\right)a_1 + i\kappa a_2$$
$$\frac{da_2}{dt} = -i\left(\omega_2 - i\Gamma_2\right)a_2 + i\kappa a_1 \qquad , \qquad\qquad (1)$$

where $\omega_{1,2}$ are the individual eigenfrequencies of the eigenmodes, $\Gamma_{1,2}$ are the resonance widths due to the objects' intrinsic (absorption, radiation etc.) losses, and $\kappa$ is the coupling coefficient. Eqs.(1) show that at exact resonance ($\omega_1 = \omega_2$ and $\Gamma_1 = \Gamma_2$), the eigenmodes of the combined system are split by $2\kappa$; the energy exchange between the two objects takes place in time $\pi/\kappa$ and is nearly perfect, apart for losses, which are minimal when the coupling rate is much faster than all loss rates ($\kappa \gg \Gamma_{1,2}$). The coupling to loss ratio $\kappa/\sqrt{\Gamma_1\Gamma_2}$ serves as a figure-of-merit in evaluating a system used for wireless energy-transfer, along with the distance over which this ratio can be achieved. The regime $k/\sqrt{G_1 G_2}$ ? ? 1 is called "strong-coupling" regime.

In some embodiments, the energy-transfer application preferably uses resonant modes of high $Q = \omega/2\Gamma$, corresponding to low (slow) intrinsic-loss rates $\Gamma$. This condition may be satisfied where the coupling is implemented using, not the lossy radiative far-field, but the evanescent (non-lossy) stationary near-field.

To implement an energy-transfer scheme, usually finite objects, namely ones that are topologically surrounded everywhere by air, are more appropriate. Unfortunately, objects of finite extent cannot support electromagnetic states that are exponentially decaying in *all* directions in air, since, from Maxwell's Equations in free space: $\bar{k}^2 = \omega^2/c^2$ where $\bar{k}$ is the wave vector, $\omega$ the frequency, and $c$ the speed of light. Because of this, one can show that they cannot support states of infinite $Q$. However, very long-lived (so-called "high-$Q$") states can be found, whose tails display the needed exponential or exponential-like decay away from the resonant object over long enough distances before they turn oscillatory (radiative). The limiting surface, where this change in the field behavior happens, is called the "radiation caustic", and, for the wireless energy-transfer scheme to be based on the near field rather than the far/radiation field, the distance between the coupled objects must be such that one lies within the radiation caustic of the other.

Furthermore, in some embodiments, small $Q_\kappa = \omega/2\kappa$ corresponding to strong (i.e., fast) coupling rate $\kappa$ is preferred over distances larger than the characteristic sizes of the objects. Therefore, since the extent of the near-field into the area surrounding a finite-sized resonant object is set typically by the wavelength, in some embodiments, this mid-range non-radiative coupling can be achieved using resonant objects of subwavelength size, and thus significantly longer evanescent field-tails. As will be seen in examples later on, such subwavelength resonances can often be accompanied with a high $Q$, so this will typically be the appropriate choice for the possibly-mobile resonant device-object. Note, though, that in some embodiments, the resonant source-object will be immobile and thus less restricted in its allowed geometry and size, which can be therefore chosen large enough that the near-field extent is not limited by the wavelength. Objects of nearly infinite extent, such as dielectric waveguides, can support guided modes whose evanescent tails are decaying exponentially in the direction away from the object, slowly if tuned close to cutoff, and can have nearly infinite Q.

In the following, we describe several examples of systems suitable for energy transfer of the type described above. We will demonstrate how to compute the CMT parameters $\omega_{1,2}$, $Q_{1,2}$ and $Q_\kappa$ described above and how to choose these parameters for particular embodiments in order to produce a desirable figure-of-merit $k / \sqrt{G_1 G_2} = \sqrt{Q_1 Q_2} / Q_k$. In addition, as described below, $Q_{1,2}$ can sometimes be limited not from intrinsic loss mechanisms but from external perturbations. In those cases producing a desirable the figure-of-merit translates to reducing $Q_k$ (i.e., increasing the coupling). Accordingly we will demonstrate how, for particular embodiments, to reduce $Q_k$

**Self-resonant Conducting-wire Coils**

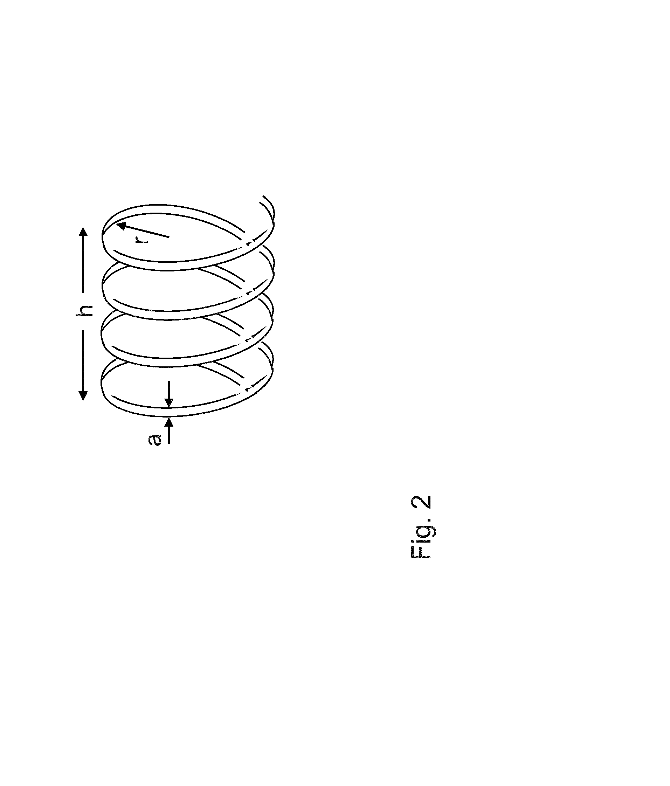

In some embodiments, one or more of the resonant objects are self-resonant conducting wire loops. Referring to Fig. 2, a conducting wire of length $l$ and cross-sectional radius $a$ is wound into a helical coil (loop) of radius $r$ and height $h$ (namely with $N = \sqrt{l^2 - h^2} / 2pr$ number of turns), surrounded by air. As described below, the wire has distributed inductance and distributed capacitance, and therefore it supports a resonant mode of frequency $\omega$. The nature of the resonance lies in the periodic exchange of energy from the electric field within the capacitance of the coil, due to the charge distribution $\rho(\mathbf{x})$ across it, to the magnetic field in free space, due to the current distribution $\mathbf{j}(\mathbf{x})$ in the wire. In particular, the charge conservation equation $\tilde{N} \times \mathbf{j} = iwr$ implies that: (i) this periodic exchange is accompanied by a $p/2$ phase-shift between the current and the charge density profiles, namely the energy $U$ contained in the coil is at certain points in time completely due to the current and at other points in time completely due to the charge, and (ii) if $I(x)$ is the linear current density in the wire, where $x$ runs along the wire, $I_o = \max \{|I(x)|\}$ is the maximum positive value of the linear current distribution and $q_o = \frac{1}{2}\int d\mathbf{x} |\rho(\mathbf{x})|$ is the maximum amount of positive charge accumulated in one side of the coil (where an equal amount of negative charge always also accumulates in the other side to make the system neutral), then $I_0 = wq_0$. Then, one can *define* an effective total inductance $L$ and an effective total capacitance $C$ of the coil through the amount of energy $U$ inside its resonant mode:

$$U \equiv \frac{1}{2} I_o^2 L \Rightarrow L = \frac{\mu_o}{4\pi I_o^2} \iint d\mathbf{x} d\mathbf{x}' \frac{\mathbf{j}(\mathbf{x}) \cdot \mathbf{j}(\mathbf{x}')}{|\mathbf{x} - \mathbf{x}'|}, \qquad (2)$$

$$U \equiv \frac{1}{2} q_o^2 \frac{1}{C} \Rightarrow \frac{1}{C} = \frac{1}{4\pi \varepsilon_o q_o^2} \iint d\mathbf{x} d\mathbf{x}' \frac{\rho(\mathbf{x}) \cdot \rho(\mathbf{x}')}{|\mathbf{x} - \mathbf{x}'|}, \qquad (3)$$

where $\mu_0$ and $\varepsilon_0$ are the magnetic permeability and electric permittivity of free space. With these definitions, the resonant frequency and the effective impedance are given by the common formulas $w = 1/\sqrt{LC}$ and $Z = \sqrt{L/C}$ respectively.

Losses in this resonant system consist of ohmic (material absorption) loss inside the wire and radiative loss into free space. One can again *define* a total absorption resistance $R_{abs}$ and a total radiation resistance $R_{rad}$ from the amount of power absorbed or radiated respectively:

$$P_{abs} \equiv \frac{1}{2} I_o^2 R_{abs} \Rightarrow R_{abs} = \zeta_c \frac{l}{2\pi a} \cdot \frac{I_{rms}^2}{I_o^2} \qquad (4)$$

$$P_{rad} \equiv \frac{1}{2} I_o^2 R_{rad} \Rightarrow R_{rad} = \zeta_o \frac{\pi}{6} \left( \frac{\omega r}{c} \right)^4 N^2 \cdot \frac{I_{rms}^2}{I_o^2}, \qquad (5)$$

where $c = 1/\sqrt{m_b e_o}$ and $\zeta_o = \sqrt{\mu_o / \varepsilon_o}$ are the light velocity and light impedance in free space, the impedance $z_c$ is $z_c = 1/sd = \sqrt{m_b w / 2s}$ with $s$ the conductivity of the conductor and $d$ the skin depth at the frequency $w$, and $I_{rms}^2 = \frac{1}{l} \int dx \left| I(x) \right|^2$. For the radiation resistance formula Eq.(5), the assumption of operation in the quasi-static regime ($r \square \lambda = 2\pi c/\omega$) has been used, which is the desired regime of a subwavelength resonance, and the result holds only for $N$ integer. With these definitions, the absorption and radiation quality factors of the resonance are given by $Q^{abs} = \omega L/R_{abs}$ and $Q^{rad} = \omega L/R_{rad}$ respectively.

From Eq.(2)-(5) it follows that to determine the resonance parameters one simply needs to know the current distribution **j** in the resonant coil. Solving Maxwell's equations to rigorously find the current distribution of the resonant electromagnetic eigenmode of a conducting-wire coil is more involved than of, for example, a standard LC circuit, and we can find no exact solutions in the literature for coils of finite length, making an exact solution difficult. One could in principle write down an elaborate transmission-line-like model, and solve it by brute force. We instead present a model that is (as described below) in good agreement (~5%) with experiment. Observing that the finite extent of the conductor forming each coil imposes the boundary condition that the current has to be zero at the ends of the coil, since no current can leave the wire, we assume that the resonant mode of each coil is well approximated by a sinusoidal current profile along the length of the conducting wire. We shall be interested in the lowest mode, so if we denote by $x$ the coordinate along the conductor, such that it runs from $-l/2$ to $+l/2$, then the current amplitude profile would have the form $I(x) = I_0 \cos(\pi x/l)$, where we have assumed that the current does not vary significantly along the wire circumference for a particular $x$, a valid assumption provided $a \square r$. It immediately follows from the continuity equation for charge that the linear charge density profile should be of the form $\rho(x) = \rho_0 \sin(\pi x/l)$, and thus $q_o = \int_0^{l/2} dx \rho_o \left| \sin(\pi x / l) \right| = \rho_o l / \pi$. Using these sinusoidal profiles we find the so-called "self-inductance" $L_s$ and "self-capacitance" $C_s$ of the coil by computing numerically the integrals Eq.(2) and (3); the associated frequency and effective impedance are $\omega_s$ and $Z_s$ respectively. The "self-resistances" $R_s$ are given analytically by Eq.(4) and (5) using $I_{rms}^2 = \frac{1}{l} \int_{-l/2}^{l/2} dx \left| I_o \cos(\pi x / l) \right|^2 = \frac{1}{2} I_o^2$, and therefore the associated $Q_s$ factors may be calculated.

The results for two particular embodiments of resonant coils with subwavelength modes of $l_s/r^3$ 70 (i.e. those highly suitable for near-field coupling and well within the quasi-static limit) are presented in Table 1. Numerical results are shown for the wavelength and absorption, radiation and total loss rates, for the two different cases of subwavelength-coil resonant modes. Note that for conducting material copper ($\sigma=5.998 \cdot 10^\wedge 7$ S/m) was used. It can be seen that expected quality factors at microwave frequencies are $Q_s^{abs}$ 3 1000 and $Q_s^{rad}$ 3 5000.

**Table 1**

| single coil | $\lambda_{3r}\,{}^tr$ | $Q_s^{rad}$ | $Q_s^{abs}$ | $Q_s = \omega_s/2\Gamma_s$ |
|---|---|---|---|---|
| r=30cm h=20cm, a=1cm, N=4 | 74 7 | 5819 | 8170 | 3399 |
| r=10cm h=3cm, a=2mm. N=6 | 140 | 49470 | 3968 | 3673 |

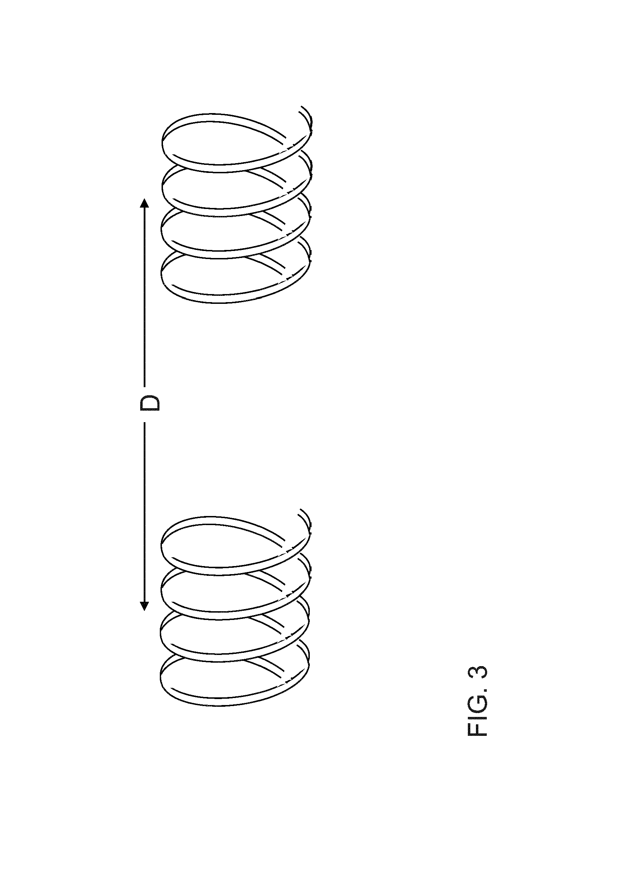

Referring to Fig. 3, in some embodiments, energy is transferred between two self resonant conducting-wire coils. The magnetic field is used to couple the different resonant conducting-wire coils at a distance $D$ between their centers. Usually, restriction of electric coupling in favor of magnetic coupling can be achieved in the system under consideration for coils with $h < r$. Then, defining the current distributions, peak currents and inductances of two coils 1, 2 respectively as $\mathbf{j}_{1,2}\,(\mathbf{x})$, $I_{1,2}$ and $L_{1,2}$, which are the analogs of $\mathbf{j}(\mathbf{x})$, $I_0$ and $L$ for the single-coil case and are therefore well defined, we can *define* their mutual inductance through the total energy:

$$U \equiv \frac{1}{2}I_1^2 L_1 + \frac{1}{2}I_2^2 L_2 + \frac{1}{2}M\left(I_1^* I_2 + I_2^* I_1\right) \Rightarrow M = \frac{\mu_o}{4\pi I_1 I_2}\iint d\mathbf{x}d\mathbf{x}'\frac{\mathbf{j}_1\left(\mathbf{x}\right)\cdot\mathbf{j}_2\left(\mathbf{x}'\right)}{\left|\mathbf{x}-\mathbf{x}'\right|}, \qquad (6)$$

where the retardation factor of $\Box$ exp$(i\omega D/c)$ inside the integral has been ignored in the quasi-static regime $D\,\Box\,\lambda$ of interest, where each coil is within the near field of the other. With this definition, and given that there is no electric coupling, the coupling coefficient is given by $\kappa = \omega M/2\sqrt{L_1 L_2} \Leftrightarrow Q_\kappa = \sqrt{L_1 L_2}/M$ .

Therefore, to calculate the coupling rate between two self-resonant coils, again the current profiles are needed and, by using again the assumed sinusoidal current profiles, we compute numerically from Eq.(6) the mutual inductance $M_s$ between two self-resonant coils at a distance $D$ between their centers, and thus $Q_{\kappa,s}$ is also determined.

**Table 2**

| pan of coils | | | | | D/r | Q = ω/2Γ | $Q_\kappa$=ω/2κ | κ/Γ |
|---|---|---|---|---|---|---|---|---|
| r=30cm, h=20cm, a=1cm N=4 λ/r≈75 $Q_s^{abs} \approx 8170$ $Q_s^{rad} \approx 5819$ | | | | | 3 | 3399 | 49.2 | 69.1 |
| | | | | | 5 | 3399 | 188.1 | 18.1 |
| | | | | | 7 | 3399 | 470.5 | 7.2 |
| | | | | | 10 | 3399 | 1225.6 | 2.8 |
| 5 6r=10cm, h=3cm, a=2mm. N=6 λ/r≈140 $Q_s^{abs} \approx 3968$ $Q_s^{rad} \approx 49470$ | | | | | 3 | 3673 | 65.1 | 56.4 |
| | | | | | 5 | 3673 | 2534 | 145 |
| | | | | | 7 | 3673 | 656.2 | 5.6 |
| | | | | | 10 | 3673 | 1837 | 20 |

Referring to Table 2, relevant parameters are shown for exemplary embodiments featuring pairs or identical self resonant coils. Numerical results are presented for the average wavelength and loss rates of the two normal modes (individual values not shown), and also the coupling rate and figure-of-merit as a function of the coupling distance $D$, for the two cases of modes presented in Table1. It can be seen that for medium distances $D/r$ = 10 - 3 the expected coupling-to-loss ratios are in the range $k/\mathbf{G}$: 2 - 70.

**Capacitively loaded conducting-wire coils**

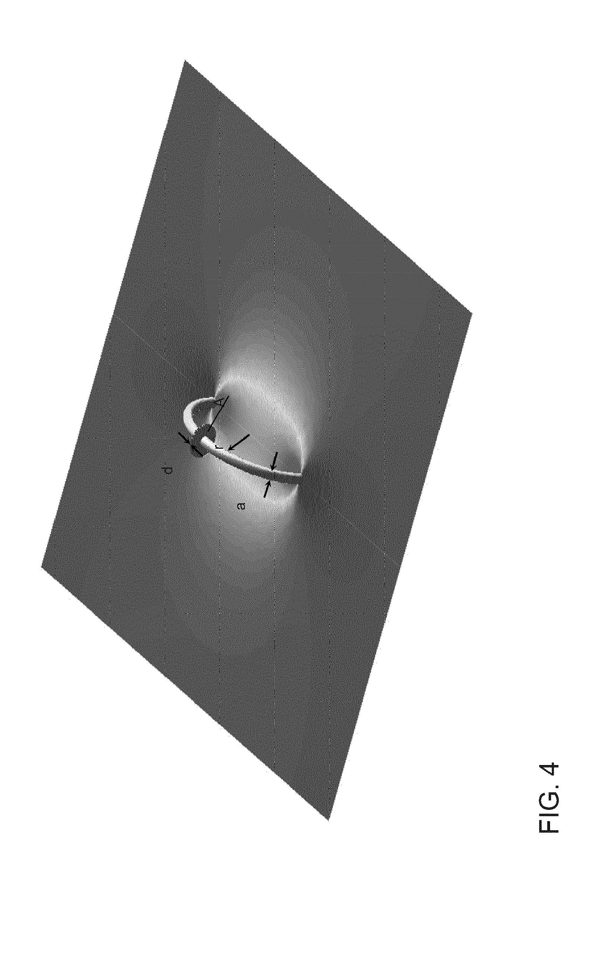

In some embodiments, one or more of the resonant objects are capacitively loaded conducting-wire coils. Referring to Fig. 4 a helical coil with $N$ turns of conducting wire as described above is connected to a pair of conducting parallel plates of area $A$ spaced by distance $d$ via a dielectric of relative permittivity $\varepsilon$ and everything surrounded by air (as shown, $N=1$ and $h=0$). The plates have a capacitance $C_p = \varepsilon_0\varepsilon A/d$, which is added to the distributed capacitance of the coil and thus modifies its resonance. Note however, that the presence of the loading capacitor modifies significantly the current distribution inside the wire and therefore the total effective inductance $L$ and total effective capacitance $C$ of the coil are different respectively from $L_s$ and $C_s$, which are calculated for a self-resonant coil of the same geometry using a sinusoidal current profile. Since some charge is accumulated at the plates of the external loading capacitor, the charge distribution $\rho$ inside the wire is reduced, so $C < C_s$, and thus, from the charge conservation equation, the current distribution **j** flattens out, so $L > L_s$. The resonant frequency for this system is

$$w = 1/\sqrt{L\left(C + C_p\right)} < w_s = 1/\sqrt{L_s C_s} \text{, and } I(x) \to I_o \cos\left(\pi x/l\right) \Rightarrow , \; C \to C_s \Rightarrow$$

$$\omega \to \omega_s, \text{ as } C_p \to 0 .$$

In general, the desired CMT parameters can be found for this system, but again a very complicated solution of Maxwell's Equations is required. Instead, we will analyze only a special case, where a reasonable guess for the current distribution can be made. When $C_p \square C_s > C$, then $\omega \approx 1/\sqrt{LC_p} \square \omega_s$ and $Z \approx \sqrt{L/C_p} \square Z_s$, while all the charge is on the plates of the loading capacitor and thus the current distribution is constant along the wire. This allows us now to compute numerically $L$ from Eq.(2). In the case $h = 0$ and $N$ integer, the integral in Eq.(2) can actually be computed analytically, giving the formula $L = \mu_0 r$ [ln(8$r$/$a$)-2]$N^2$. Explicit analytical formulas are again available for $R$ from Eq. (4) and (5), since $I_{rms} = I_0$, so we can determine also $Q$. At the end of the calculations, the validity of the assumption of constant current profile is confirmed by checking that indeed the condition $C_p \square C_s \Leftrightarrow \omega \square \omega_s$ is satisfied. To satisfy this condition, one could use a large external capacitance, however, this would usually shift the operational frequency lower than the optimal frequency, which we will determine shortly; instead, in typical embodiments, one often prefers coils with very small self-capacitance $C_s$ to begin with, which usually holds, for the types of coils under consideration, when $N$ =1, so that the self-capacitance comes from the charge distribution across the single turn, which is almost always very small, or when $N > 1$ and $h \square 2Na$, so that the dominant self-capacitance comes from the charge distribution across adjacent turns, which is small if the separation between adjacent turns is large.

The external loading capacitance $C_p$ provides the freedom to tune the resonant frequency (for example by tuning $A$ or $d$). Then, for the particular simple case $h = 0$, for which we have analytical formulas, the total $Q = \omega L/(R_{abs} + R_{rad})$ becomes highest at the optimal frequency

$$w^* = \left(\frac{4}{p}\right)^{2/7} \sqrt{\frac{e_o}{2s}} \times \frac{1}{aNr^3} , \tag{7}$$

reaching the value

$$Q^* = \frac{6}{7p}\left(2p^2 h_o\right) \frac{s\, a^2 N^2}{r} ^{3/7} \times \left[\ln\left(\frac{8r}{a}\right) - 2\right] . \tag{8}$$

At lower frequencies it is dominated by ohmic loss and at higher frequencies by radiation. Note, however, that these formulas are accurate as long as $\omega^* \square \omega_s$ and, as explained above, this holds almost always when $N = 1$, and is usually less accurate when $N > 1$, since $h = 0$ usually implies a large self-capacitance. A coil with large $h$ can be used, if the self-capacitance needs to be reduced compared to the external capacitance, but then the formulas for $L$ and $\omega^*$, $Q^*$ are again less accurate. Similar qualitative behavior is expected, but a more complicated theoretical model is needed for making quantitative predictions in that case.

The results of the above analysis for two embodiments of subwavelength modes of $l / r^3$ 70 (namely highly suitable for near-field coupling and well within the quasi-static limit) of coils with $N = 1$ and $h = 0$ at the optimal frequency Eq.(7) are presented in Table 3. To confirm the validity of constant-current assumption and the resulting analytical formulas, mode-solving calculations were also performed using another completely independent method: computational 3D finite-element frequency-domain (FEFD) simulations (which solve Maxwell's Equations in frequency domain exactly apart for spatial discretization) were conducted, in which the boundaries of the conductor were modeled using a complex impedance $z_c = \sqrt{m_o w / 2s}$ boundary condition, valid as long as $z_c/z_o = 1$ ($<10^{-5}$ for copper in the microwave). Table 3 shows Numerical FEFD (and in parentheses analytical) results for the wavelength and absorption, radiation and total loss rates, for two different cases of subwavelength-loop resonant modes. Note that for conducting material copper ($\sigma = 5.998 \cdot 10^7 S/m$) was used. (The specific parameters of the plot in Fig. 4 are highlighted with bold in the table.)The two methods (analytical and computational) are in very good agreement and show that expected quality factors in the microwave are $Q^{abs} \, 3 \, 1000$ and $Q^{rad} \, 3 \, 10000$.

**Table 3**

| single coil | $\lambda r$ | $Q^{rad}$ | $Q^{abc}$ | $Q = \omega/2T$ |
|---|---|---|---|---|
| **r=30cm, a=2cm $\varepsilon$=10, A=138cm$^2$, d=4mm** | **111.4 (112.4)** | **29546 (30512)** | **4886 (5117)** | **4193 (4381)** |
| r=10cm, a=2mm $\varepsilon$=10, A=3.14cm$^2$, d=1mm | 69 7 (70.4) | 10702 (10727) | 1545 (1604) | 1350 (1395) |

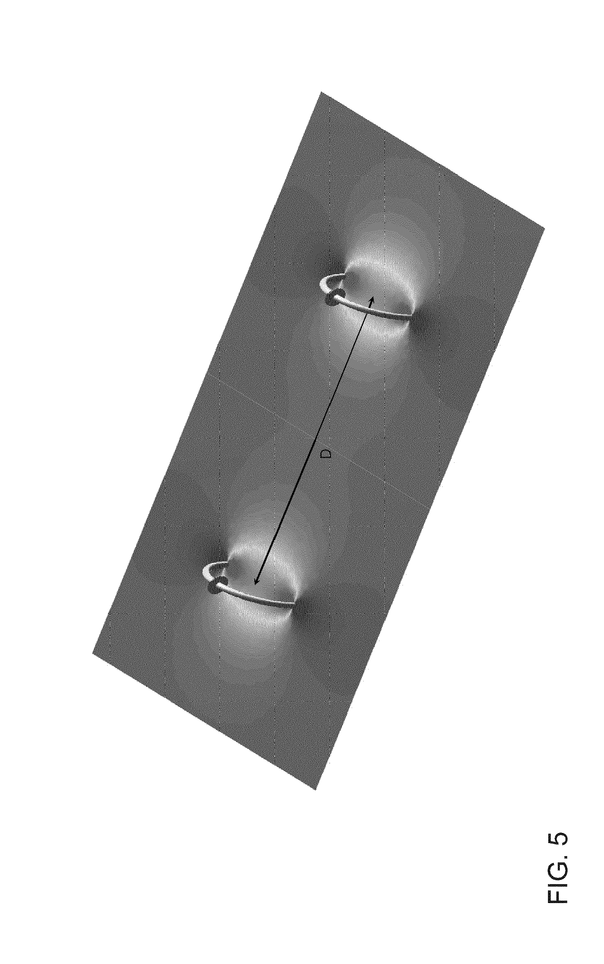

Referring to Fig. 5, in some embodiments, energy is transferred between two self capacitively-loaded coils. For the rate of energy transfer between two capacitively-loaded coils 1 and 2 at distance $D$ between their centers, the mutual inductance M can be evaluated numerically from Eq.(6) by using constant current distributions in the case $\omega \, \Box \, \omega_s$. In the case $h = 0$ and $N_1$, $N_2$ integers, again we have an analytical formula, which, in the quasi-static limit $r \ll D \ll \lambda$ and

for the relative orientation shown in Figure 4, is $M \approx \pi/2 \cdot \mu_0 \, (r_1 r_2)^2 \, N_1 N_2/D^3$, which means that $Q_\kappa \propto \left( D \big/ \sqrt{r_1 r_2} \right)^3$ is independent of the frequency $\omega$ and the number of turns $N_1$, $N_2$ Consequently, the resultant coupling figure-of-merit of interest is

$$\frac{\kappa}{\sqrt{\Gamma_1 \Gamma_2}} = \frac{\sqrt{Q_1 Q_2}}{Q_\kappa} \approx \left( \frac{\sqrt{r_1 r_2}}{D} \right)^3 \cdot \frac{\pi^2 \eta_o \frac{\sqrt{r_1 r_2}}{\lambda} \cdot N_1 N_2}{\prod\limits_{J=1,2} \left( \sqrt{\frac{\pi \eta_o}{\lambda \sigma}} \cdot \frac{r_J}{a_J} N_J + \frac{8}{3} \pi^5 \eta_o \left( \frac{r_J}{\lambda} \right)^4 N_J^2 \right)^{1/2}}, \tag{9}$$

which again is more accurate for $N_1 = N_2 = 1$.

From Eq.(9) it can be seen that the optimal frequency, where the figure-of-merit is maximized, is that where $\sqrt{Q_1 Q_2}$ is maximized, since $Q_\kappa$ does not depend on frequency (at least for the distances $D \ll \lambda$ of interest for which the quasi-static approximation is still valid). Therefore, the optimal frequency is independent of the distance $D$ between the two coils and lies between the two frequencies where the single-coil $Q_1$ and $Q_2$ peak. For same coils, it is given by Eq. (7) and then the figure-of merit Eq.(9) becomes

$$\left( \frac{k}{G} \right)^* = \frac{Q^*}{Q_k} \gg \left( \frac{r}{D} \right)^3 \times \frac{3}{7} \left( 2 p^2 h_o \frac{s \, a^2 N^2}{r} \right)^{3/7} . \tag{10}$$

Referring to Table 4, numerical FEFD and, in parentheses, analytical results based on the above are shown for two systems each composed of a matched pair of the loaded coils described in Table 3. The average wavelength and loss rates are shown along with the coupling rate and coupling to loss ratio figure-of-merit $k$ / Gas a function of the coupling distance $D$, for the two cases. Note that the average numerical $\Gamma^{rad}$ shown are again slightly different from the single-loop value of Figure 3, analytical results for $\Gamma^{rad}$ are not shown but the single-loop value is used. (The specific parameters corresponding to the plot in Fig. 5 are highlighted with bold in the table.) Again we chose $N = 1$ to make the constant-current assumption a good one and computed $M$ numerically from Eq.(6). Indeed the accuracy can be confirmed by their agreement with the computational FEFD mode-solver simulations, which give $k$ through the frequency splitting (= $2k$) of the two normal modes of the combined system. The results show that for medium distances $D / r = 10 - 3$ the expected coupling-to-loss ratios are in the range $k / G : 0.5 - 50$.

**Table 4**

| pair of coils | $D, \tau$ | $Q^{rad}$ | $Q=\omega/2\Gamma$ | $Q_\kappa=\omega/2\kappa$ | $\kappa/\Gamma$ |
|---|---|---|---|---|---|
| **r=30cm, a=2cm** $\varepsilon$**=10, A=138cm$^2$, d=4mm** $\lambda r \approx 112\ Q^{abs}$ $\approx 4886$ | 3 | 30729 | 4216 | 62 6 (63 7) | 67 4 (68 7) |
| | 5 | 29577 | 4194 | 235 (248) | 17.8 (17.6) |
| | **7** | **29128** | **4185** | **589 (646)** | **7.1 (6.8)** |
| | 10 | 28833 | 4177 | 1539 (1828) | 2.7(24) |
| r=10cm. a=2mm $\varepsilon$=10, A=3.14cm$^2$, d=1mm $\lambda$, 'r $\approx$ 70 $Q^{abs}$ $\approx 1546$ | 3 | 10955 | 1355 | 85.4 (91.3) | 15.9 (15.3) |
| | 5 | 10740 | 1351 | 313 (356) | 4.32 (3.92) |
| | 7 | 10759 | 1351 | 754 (925) | 1.79 (1.51) |
| | 10 | 10756 | 1351 | 1895 (2617) | 0 71 (0.53) |

In some embodiments, the results above can be used to increase or optimize the performance of a wireless energy transfer system which employs capacitively loaded coils. For example, the scaling of Eq.(10) with the different system parameters one sees that to maximize the system figure-of-merit $k / G$ one can, for example:

- Decrease the resistivity of the conducting material. This can be achieved, for example, by using good conductors (such as copper or silver) and/or lowering the temperature. At very low temperatures one could use also superconducting materials to achieve extremely good performance.
- Increase the wire radius $a$. In typical embodiments, this action is limited by physical size considerations.
- For fixed desired distance $D$ of energy transfer, increase the radius of the loop $r$. In typical embodiments, this action is limited by physical size considerations.
- For fixed desired distance vs. loop-size ratio $D/r$, decrease the radius of the loop $r$. In typical embodiments, this action is limited by physical size considerations.
- Increase the number of turns $N$. (Even though Eq.(10) is expected to be less accurate for $N > 1$, qualitatively it still provides a good indication that we expect an improvement in the coupling-to-loss ratio with increased $N$.) In typical embodiments, this action is limited by physical size and possible voltage considerations, as will be discussed in following sections.
- Adjust the alignment and orientation between the two coils. The figure-of-merit is optimized when both cylindrical coils have exactly the same axis of cylindrical symmetry (namely they are "facing" each other). In some embodiments, particular mutual coil angles and orientations that lead to zero mutual inductance (such as the orientation where the axes of the two coils are perpendicular) should be avoided. Finally, note that in typical embodiments the height of the coil $h$ should not affect the coupling-to-loss ratio, because it affects predominantly the coil inductance, which cancels between $Q$ and $Q_\kappa$. It can be used though to reduce the coil self-capacitance in favor of the external loading capacitance.

The above analysis technique can be used to design systems with desired parameters. For example, as listed below, the above described techniques can be used to determine the cross sectional radius $a$ of the wire which one should use when designing as system two same single-turn coils with a given radius in order to achieve a specific performance in terms of $k / G$ at a given $D / r$ between them, when the material is copper ($\sigma=5.998 \cdot 10^7 S/m$):

$$D/r = 5,\ k/G^3\ 10,\ r = 30cm\ \text{Þ}\ a^3\ 9mm$$

$$D/r = 5,\ k/G^3\ 10,\ r = 5cm\ \text{Þ}\ a^3\ 3.7mm$$

$$D/r = 5,\ k/G^3\ 20,\ r = 30cm\ \text{Þ}\ a^3\ 20mm$$

$$D/r = 5,\ k/G^3\ 20,\ r = 5cm\ \text{Þ}\ a^3\ 8.3mm$$

$$D/r = 10, \, k/G \geq 1, \, r = 30cm \Rightarrow a \geq 7mm$$

$$D/r = 10, \, k/G \geq 1, \, r = 5cm \Rightarrow a \geq 2.8mm$$

$$D/r = 10, \, k/G \geq 3, \, r = 30cm \Rightarrow a \geq 25mm$$

$$D/r = 10, \, k/G \geq 3, \, r = 5cm \Rightarrow a \geq 10mm$$

Similar analysis can be done for the case of two dissimilar loops. For example, in some embodiments, the device under consideration is very specific (e.g. a laptop or a cell phone), so the dimensions of the device object ($r_d$, $h_d$, $a_d$, $N_d$) are very restricted. However, in some such embodiments, the restrictions on the source object ($r_s$, $h_s$, $a_s$, $N_s$) are much less, since the source can, for example, be placed under the floor or on the ceiling. In such cases, the desired distance is often well defined, based on the application (e.g. $D \approx 1m$ for charging a laptop on a table wirelessly from the floor). Listed below are examples (simplified to the case $N_s = N_d = 1$ and $h_s = h_d = 0$) of how one can vary the dimensions of the source object to achieve the desired system performance in terms of $k/\sqrt{G_s G_d}$, when the material is again copper ($\sigma = 5.998 \cdot 10^7$ S/m):

$$D = 1.5m, \, k/\sqrt{G_s G_d} \geq 15, \, r_d = 30cm, \, a_d = 6mm \Rightarrow r_s = 1.158m, \, a_s \geq 5mm$$

$$D = 1.5m, \, k/\sqrt{G_s G_d} \geq 30, \, r_d = 30cm, \, a_d = 6mm \Rightarrow r_s = 1.15m, \, a_s \geq 33mm$$

$$D = 1.5m, \, k/\sqrt{G_s G_d} \geq 1, \, r_d = 5cm, \, a_d = 4mm \Rightarrow r_s = 1.119m, \, a_s \geq 7mm$$

$$D = 1.5m, \, k/\sqrt{G_s G_d} \geq 2, \, r_d = 5cm, \, a_d = 4mm \Rightarrow r_s = 1.119m, \, a_s \geq 52mm$$

$$D = 2m, \, k/\sqrt{G_s G_d} \geq 10, \, r_d = 30cm, \, a_d = 6mm \Rightarrow r_s = 1.518m, \, a_s \geq 7mm$$

$$D = 2m, \, k/\sqrt{G_s G_d} \geq 20, \, r_d = 30cm, \, a_d = 6mm \Rightarrow r_s = 1.514m, \, a_s \geq 50mm$$

$$D = 2m, \, k/\sqrt{G_s G_d} \geq 0.5, \, r_d = 5cm, \, a_d = 4mm \Rightarrow r_s = 1.491m, \, a_s \geq 5mm$$

$$D = 2m, \, k/\sqrt{G_s G_d} \geq 1, \, r_d = 5cm, \, a_d = 4mm \Rightarrow r_s = 1.491m, \, a_s \geq 36mm$$

As will be described below, in some embodiments the quality factor $Q$ of the resonant objects is limited from external perturbations and thus varying the coil parameters cannot lead to improvement in $Q$. In such cases, one may opt to increase the coupling to loss ratio figure-of-merit by decreasing $Q_\kappa$ (i.e. increasing the coupling). The coupling does not depend on the frequency and the number of turns, and depends very weakly on the coil heights. Therefore, the remaining degrees of freedom are:

- Increase the wire radii $a_1$ and $a_2$. In typical embodiments, this action is limited by physical size considerations.
- For fixed desired distance $D$ of energy transfer, increase the radii of the coils $r_1$ and $r_2$. In typical embodiments, this action is limited by physical size considerations.

- For fixed desired distance vs. coil-sizes ratio $D/\sqrt{r_1 r_2}$ , only the weak (logarithmic) dependence of the inductance remains, which suggests that one should decrease the radii of the coils $r_1$ and $r_2$. In typical embodiments, this action is limited by physical size considerations.

- Adjust the alignment and orientation between the two coils. In typical embodiments, the coupling is optimized when both cylindrical coils have exactly the same axis of cylindrical symmetry (namely they are "facing" each other). Particular mutual coil angles and orientations that lead to zero mutual inductance (such as the orientation where the axes of the two coils are perpendicular) should obviously be avoided.

Further practical considerations apart from efficiency, e.g. physical size limitations, will be discussed in detail below.

Note that even though particular embodiments (self-resonant coils and capacitively loaded coils) are presented and analyzed above as examples of systems that use resonant magnetic coupling for wireless energy transfer, those of self-resonant conductive-wire coils and capacitively-loaded resonant conductive-wire coils, any system that supports an electromagnetic mode with its magnetic energy extending much further than its electric energy can be used for transferring energy by means of magnetic coupling. For example, there can be many abstract geometries with distributed capacitances and inductances that support the desired kind of magnetic resonances. In any one of these geometries, one can choose certain parameters to increase and/or optimize $\sqrt{Q_1 Q_2}/Q_k$  or, if the $Q$'s are limited by external factors, to increase and/or optimize for $Q_\kappa$.

It is also important to appreciate the difference between the above described resonant-coupling inductive scheme and the well-known non-resonant inductive scheme for energy transfer. Using CMT it is easy to show that, keeping the geometry and the energy stored at the source fixed, the resonant inductive mechanism allows for $\sim Q^2$ ($\sim 10^6$) times more power delivered for work at the device than the traditional non-resonant mechanism. This is why only close-range contact-less medium-power (-W) transfer is possible with the latter, while with resonance either close-range but large-power (-kW) transfer is allowed or, as currently proposed, if one also ensures operation in the strongly-coupled regime, medium-range and medium-power transfer is possible. Capacitively-loaded conductive loops are currently used as resonant antennas (for example in cell phones), but those operate in the far-field regime with $D/r \gg 1$, $r/\lambda \sim 1$, and the radiation $Q$'s are intentionally designed to be small to make the antenna efficient, so they are not appropriate for energy transfer.

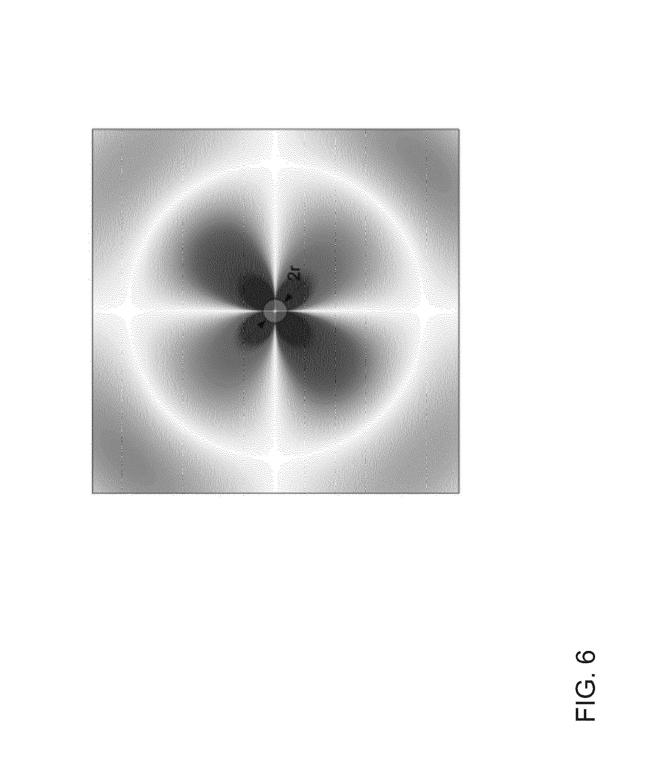

In some embodiments, both the electric and magnetic field may be used for wireless energy transfer. Consider a two dimensional dielectric disk object, as shown in Fig. 6, of radius $r$ and relative permittivity $\varepsilon$ surrounded by air that supports high-$Q$ "whispering-gallery" resonant modes. The loss mechanisms for the energy stored inside such a resonant system are radiation into free space and absorption inside the disk material. High-$Qrad$ and long-tailed subwavelength resonances can be achieved when the dielectric permittivity $\varepsilon$ is large and the azimuthal field variations are slow (namely of small principal number $m$). Material absorption is related to the material loss tangent: $Qabs\Box \operatorname{Re}\{\varepsilon\}/\operatorname{Im}\{\varepsilon\}$. Mode-solving calculations for this type of disk resonances were performed using two independent methods: numerically, 2D finite-difference frequency-domain (FDFD) simulations (which solve Maxwell's Equations in frequency domain exactly apart for spatial discretization) were conducted with a resolution of $30pts/r$; analytically, standard separation of variables (SV) in polar coordinates was used.

**Table 5**

| smgle disk | $\lambda$, $r$ | $Q^{abc}$ | $Q^{rad}$ | $Q$ |
|---|---|---|---|---|
| **Re{$\varepsilon$}=147.7, m=2** | **20.01 (20.00)** | **10103 (10075)** | **1988 (1992)** | **1661 (1663)** |
| Re{$\varepsilon$}=65 6 m=3 | 9952 (9 9950) | 10098 (10087) | 9078(9168) | 4780(4802) |

The results for two TE-polarized dielectric-disk subwavelength modes of $\lambda/r \geq 10$ are presented in Table 5. Table 5 shows numerical FDFD (and in parentheses analytical SV) results for the wavelength and absorption, radiation and total loss rates, for two different cases of subwavelength-disk resonant modes. Note that disk-material loss-tangent $\operatorname{Im}\{\varepsilon\}/\operatorname{Re}\{\varepsilon\}=10^{-4}$ was used. (The specific parameters corresponding to the plot in Fig 6. are highlighted with bold in the table.) The two methods have excellent agreement and imply that for a properly designed resonant low-loss-dielectric object values of $Qrad \geq 2000$ and $Qabs \sim 10000$ are achievable. Note that for the 3D case the computational complexity would be immensely increased, while the physics would not be significantly different. For example, a spherical object of $\varepsilon=147.7$ has a whispering gallery mode with $m=2$, $Qrad=13962$, and $\lambda/r=17$.

The required values of $\varepsilon$, shown in Table 5, might at first seem unrealistically large. However, not only are there in the microwave regime (appropriate for approximately meter-range coupling applications) many materials that have both reasonably high enough dielectric constants and low losses (e.g. Titania, Barium tetratitanatem, Lithium tantalite etc.), but also ε could signify instead the effective index of other known subwavelength surface-wave systems, such as surface-plasmon modes on surfaces of metal-like (negative-ε) materials or metallo-dielectric photonic crystals.

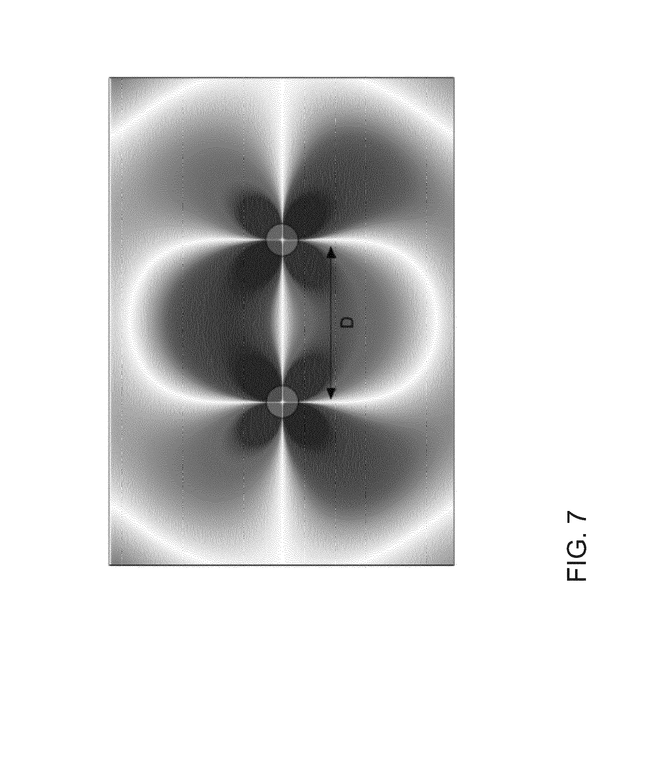

To calculate now the achievable rate of energy transfer between two disks 1 and 2, as shown in Fig. 7 we place them at distance $D$ between their centers. Numerically, the FDFD mode-solver simulations give κ through the frequency splitting (= 2κ) of the normal modes of the combined system, which are even and odd superpositions of the initial single-disk modes; analytically, using the expressions for the separation-of-variables eigenfields $\mathbf{E}_{1,2}(\mathbf{r})$ CMT gives

κ through $\kappa = \omega_1 / 2 \cdot \int d^3 r \varepsilon_2(\mathbf{r}) E_2^*(\mathbf{r}) E_1(\mathbf{r}) / \int d^3 r \varepsilon(\mathbf{r}) \left| E_1(\mathbf{r}) \right|^2$ where $\varepsilon_j(\mathbf{r})$ and $\varepsilon(\mathbf{r})$ are the dielectric functions that describe only the disk j and the whole space respectively. Then, for medium distances $D/r$ =10-3 and for non-radiative coupling such that $D<2r_C$, where $r_C = m\lambda/2\pi$ is the radius of the radiation caustic, the two methods agree very well, and we finally find , as shown in Table 6, coupling-to-loss ratios in the range κ/Γ ~ 1-50. Thus, for the analyzed embodiments, the achieved figure-of-merit values are large enough to be useful for typical applications, as discussed below.

**Table 6**

| two disks | D/r | $Q^{rad}$ | Q=ω/2Γ | ω/2κ | κ/Γ |
|---|---|---|---|---|---|
| **Re{ε}=147.7, m=2** $\lambda / r \approx 20$ $Q^{abs} \approx 10093$ | 3 | 2478 | 1989 | 46.9 (47.5) | 424 (35.0) |
| | 5 | 2411 | 1946 | 298 0 (298 0) | 6 5 (5.6) |
| | 7 | 2196 | 1804 | 769 7 (770 2) | 2 3 (2.2) |
| | **10** | **2017** | **1681** | **1714 (1601)** | **0.98 (1.04)** |
| Re{ε}=65 6, m=3 $\lambda / r \approx 10$ $Q^{abs} \approx 10096$ | 3 | 7972 | 4455 | 144 (140) | 30 9 (34 3) |
| | 5 | 9240 | 4824 | 2242 (2083) | 22 (2.3) |
| | 7 | 9187 | 4810 | 7485 (7417) | 0.64 (0.65) |

**System Sensitivity to Extraneous Objects**

In general, the overall performance of particular embodiment of the resonance-based wireless energy-transfer scheme depends strongly on the robustness of the resonant objects' resonances. Therefore, it is desirable to analyze the resonant objects' sensitivity to the near presence of random non-resonant extraneous objects. One appropriate analytical model is that of "perturbation theory" (PT), which suggests that in the presence of an extraneous object $e$ the field amplitude $a_1(t)$ inside the resonant object 1 satisfies, to first order:

$$\frac{da_1}{dt} = -\imath \left(\omega_1 - \imath \Gamma_1\right) a_1 + \imath \left(\kappa_{11-e} + \imath \Gamma_{1-e}\right) a_1$$

(11)

where again $\omega_1$ is the frequency and $\Gamma_1$ the intrinsic (absorption, radiation etc.) loss rate, while $\kappa_{11-e}$ is the frequency shift induced onto 1 due to the presence of $e$ and $\Gamma_{1-e}$ is the extrinsic due to $e$ (absorption inside $e$, scattering from $e$ etc.) loss rate. The first-order PT model is valid only for small perturbations. Nevertheless, the parameters $k_{11-e}$, $G_{1-e}$ are well defined, even outside that regime, if $a_1$ is taken to be the amplitude of the exact perturbed mode. Note also that interference effects between the radiation field of the initial resonant-object mode and the field scattered off the extraneous object can for strong scattering (e.g. off metallic objects) result in total radiation- $\Gamma_{1-e}$'s that are smaller than the initial radiation- $\Gamma_1$ (namely $\Gamma_{1-e}$ is negative).

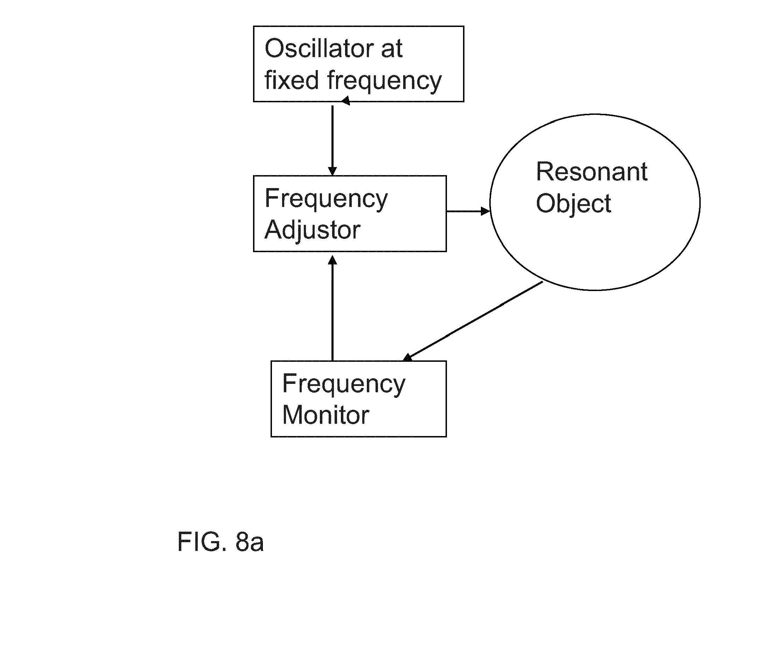

The frequency shift is a problem that can be "fixed" by applying to one or more resonant objects a feedback mechanism that corrects its frequency For example, referring to Fig. 8a, in some embodiments each resonant object is provided with an oscillator at fixed frequency and a monitor which determines the frequency of the object. Both the oscillator and the monitor are coupled to a frequency adjuster which can adjust the frequency of the resonant object by, for example, adjusting the geometric properties of the object (e.g. the height of a self resonant coil, the capacitor plate spacing of a capacitively loaded coil, the shape of a dielectric disc, etc.) or changing the position of a non-resonant object in the vicinity of the resonant object. The frequency adjuster determines the difference between the fixed frequency and the object frequency and acts to bring the object frequency into alignment with the fixed frequency. This technique assures that all resonant objects operate at the same fixed frequency, even in the presence of extraneous objects

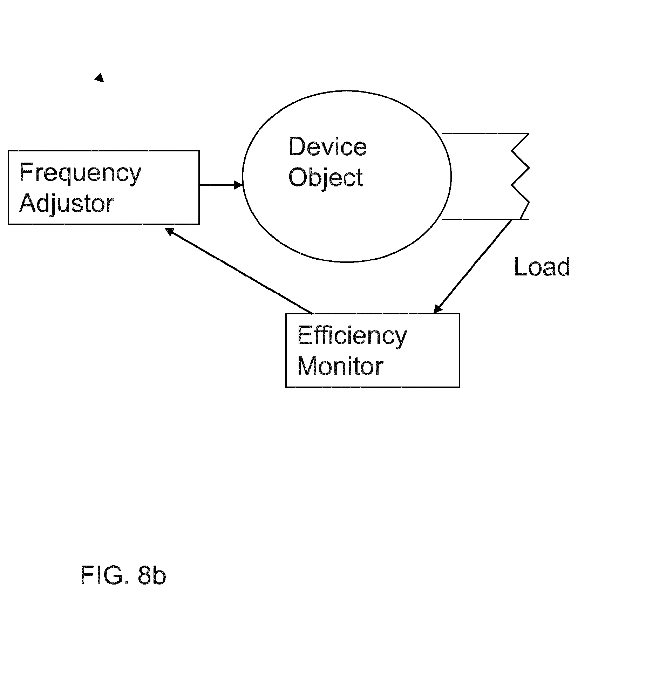

As another example, referring to Fig. 8b, in some embodiments, during energy transfer from a source object to a device object, the device object provides energy to a load, and an efficiency monitor measures the efficiency of the transfer. A frequency adjuster coupled to the load and the efficiency monitor acts to adjust the frequency of the object to maximize the transfer efficiency.

In various embodiments, other frequency adjusting schemes may be used which rely on information exchange between the resonant objects. For example, the frequency of a source object can be monitored and transmitted to a device object, which is in turn synched to this frequency using frequency adjusters as described above. In other embodiments the frequency of a single clock may be transmitted to multiple devices, and each device then synched to that frequency.

Unlike the frequency shift, the extrinsic loss can be detrimental to the functionality of the energy-transfer scheme, because it is difficult to remedy, so the total loss rate $\Gamma_{1[e]}=\Gamma_1+\Gamma_{1-e}$ (and the corresponding figure-of-merit

$\kappa_{[e]}/\sqrt{\Gamma_{1[e]}\Gamma_{2[e]}}$ , where $\kappa_{[e]}$ the perturbed coupling rate) should be quantified. In embodiments using primarily magnetic resonances, the influence of extraneous objects on the resonances is nearly absent. The reason is that, in the quasi-static regime of operation ($r$«$\lambda$) that we are considering, the near field in the air region surrounding the coil is predominantly magnetic (while most of the electric field is localized within the self-capacitance of the coil or the externally loading capacitor), therefore extraneous non-metallic objects $e$ that could interact with this field and act as a perturbation to the resonance are those having significant magnetic properties (magnetic permeability $Re\{\mu\}>1$ or magnetic loss $Im\{\mu\}>0$). Since almost all every-day materials are non-magnetic, they respond to magnetic fields in the same way as free space, and thus will not disturb the resonance of a conducting-wire loop.

As noted above, an extremely important implication of this fact relates to safety considerations for human beings. Humans are also non-magnetic and can sustain strong magnetic fields without undergoing any risk. A typical example, where magnetic fields $B$~$1T$ are safely used on humans, is the Magnetic Resonance Imaging (MRI) technique for medical testing. In contrast, the magnetic near-field required in typical embodiments in order to provide a few Watts of power to devices is only $B$~$10^{-4}T,$ which is actually comparable to the magnitude of the Earth's magnetic field. Since, as explained above, a strong electric near-field is also not present and the radiation produced from this non-radiative scheme is minimal, it is reasonable to expect that our proposed energy-transfer method should be safe for living organisms.

One can, for example, estimate the degree to which the resonant system of a capacitively-loaded conducting-wire coil has mostly magnetic energy stored in the space surrounding it. If one ignores the fringing electric field from the capacitor, the electric and magnetic energy densities in the space surrounding the coil come just from the electric and magnetic field produced by the current in the wire; note that in the far field, these two energy densities must be equal, as is always the case for radiative fields. By using the results for the fields produced by a subwavelength ($r \square \lambda$) current loop (magnetic dipole) with $h = 0$ [], we can calculate the ratio of electric to magnetic energy densities, as a function of distance $p$ from the center of the loop (in the limit $r \square p$) and the angle $\theta$ with respect to the loop axis:

$$\frac{u_e(x)}{u_m(x)} = \frac{\varepsilon_o\left|E(x)\right|^2}{\mu_o\left|H(x)\right|^2} = \frac{\left(1+\frac{1}{x^2}\right)\sin^2\theta}{\left(\frac{1}{x^2}+\frac{1}{x^4}\right)4\cos^2\theta+\left(1-\frac{1}{x^2}+\frac{1}{x^4}\right)\sin^2\theta};\ x=2\pi\frac{p}{\lambda}$$

$$\Rightarrow \frac{\iint\limits_{S_p} u_e(x)dS}{\iint\limits_{S_p} u_m(x)dS} = \frac{1+\frac{1}{x^2}}{1+\frac{1}{x^2}+\frac{3}{x^4}};\ x=2\pi\frac{p}{\lambda} \qquad , \qquad (12)$$

where the second line is the ratio of averages over all angles by integrating the electric and magnetic energy densities over the surface of a sphere of radius $p$. From Eq.(12) it is obvious that indeed for all angles in the near field ($x \square 1$) the magnetic energy density is dominant, while in the far field ($x \square 1$) they are equal as they should be. Also, the preferred positioning of the loop is such that objects which may interfere with its resonance lie close to its axis ($\theta = 0$), where there is no electric field. For example, using the systems described in Table 4, we can estimate from Eq.(12) that for the loop of $r = 30cm$ at a distance $p = 10r = 3m$ the ratio of average electric to average magnetic energy density would be ~12%

and at $p = 3r = 90cm$ it would be ~1%, and for the loop of $r = 10cm$ at a distance $p = 10r = 1m$ the ratio would be ~ 33% and at $p = 3r = 30cm$ it would be ~ 2.5%. At closer distances this ratio is even smaller and thus the energy is predominantly magnetic in the near field, while in the radiative far field, where they are necessarily of the same order (ratio → 1), both are very small, because the fields have significantly decayed, as capacitively loaded coil systems are designed to radiate very little. Therefore, this is the criterion that qualifies this class of resonant system as a magnetic resonant system.

To provide an estimate of the effect of extraneous objects on the resonance of a capacitively-loaded loop including the capacitor fringing electric field, we use the perturbation theory formula, stated earlier,

$$\Gamma_{1-e}^{abs} = \omega_1 / 4 \cdot \int d^3\mathbf{r} \, \mathrm{Im} \left\{ \varepsilon_e \, (\mathbf{r}) \right\} \left| \mathbf{E}_1 \, (\mathbf{r}) \right|^2 \Big/ U$$ with the computational FEFD results for the field of an example like the one shown in the plot of Fig. 5 and with a rectangular object of dimensions *30cm x 30cm x 1.5m* and permittivity *ε=49+16i* (consistent with human muscles) residing between the loops and almost standing on top of one capacitor (~*3cm* away from it) and find $Q_{c\text{-}h}^{abs}$ : $10^5$ and for ~*10cm* away $Q_{c\text{-}h}^{abs}$ : $5 \times 10^5$. Thus, for ordinary distances (~*1m*) and placements (not immediately on top of the capacitor) or for most ordinary extraneous objects e of much smaller loss-tangent, we conclude that it is indeed fair to say that $Q_{c\text{-}e}^{abs}$ ® ¥. The only perturbation that is expected to affect these resonances is a close proximity of large metallic structures.

Self-resonant coils are more sensitive than capacitively-loaded coils, since for the former the electric field extends over a much larger region in space (the entire coil) rather than for the latter (just inside the capacitor). On the other hand, self-resonant coils are simple to make and can withstand much larger voltages than most lumped capacitors.

In general, different embodiments of resonant systems have different degree of sensitivity to external perturbations, and the resonant system of choice depends on the particular application at hand, and how important matters of sensitivity or safety are for that application. For example, for a medical implantable device (such as a wirelessly powered artificial heart) the electric field extent must be minimized to the highest degree possible to protect the tissue surrounding the device. In such cases where sensitivity to external objects or safety is important, one should design the resonant systems so that the ratio of electric to magnetic energy density $u_e / u_m$ is reduced or minimized at most of the desired (according to the application) points in the surrounding space.

In embodiments using resonances that are not primarily magnetic, the influence of extraneous may be of concern. For example, for dielectric disks, small, low-index, low-material-loss or far-away stray objects will induce small scattering and absorption. In such cases of small perturbations these extrinsic loss mechanisms can be quantified using respectively the analytical first-order perturbation theory formulas

$$\Gamma_{1-e}^{rad} = \omega_1 \int d^3\mathbf{r} \, \mathrm{Re} \left\{ \varepsilon_e \, (\mathbf{r}) \right\} \left| \mathbf{E}_1 \, (\mathbf{r}) \right|^2 \Big/ U$$

and

$$\kappa \, \square \, \Gamma_{1-e} \, \Gamma_{1-e}^{abs} = \omega_1 / 4 \cdot \int d^3\mathbf{r} \, \mathrm{Im} \left\{ \varepsilon_e \, (\mathbf{r}) \right\} \left| \mathbf{E}_1 \, (\mathbf{r}) \right|^2 \Big/ U$$

where $U = 1/2 \int d^3\mathbf{r}\varepsilon \, (\mathbf{r}) |\mathbf{E}_1(\mathbf{r})|^2$ is the total resonant electromagnetic energy of the unperturbed mode. As one can see, both of these losses depend on the square of the resonant electric field tails $\mathbf{E}_1$ at the site of the extraneous object. In contrast, the coupling rate from object 1 to another resonant object 2 is, as stated earlier,

$$\kappa = \omega_1 / 2 \cdot \int d^3\mathbf{r}\varepsilon_2(\mathbf{r})\mathbf{E}_2^*(\mathbf{r})\mathbf{E}_1(\mathbf{r}) / \int d^3\mathbf{r}\varepsilon(\mathbf{r}) \left| \mathbf{E}_1(\mathbf{r}) \right|^2$$

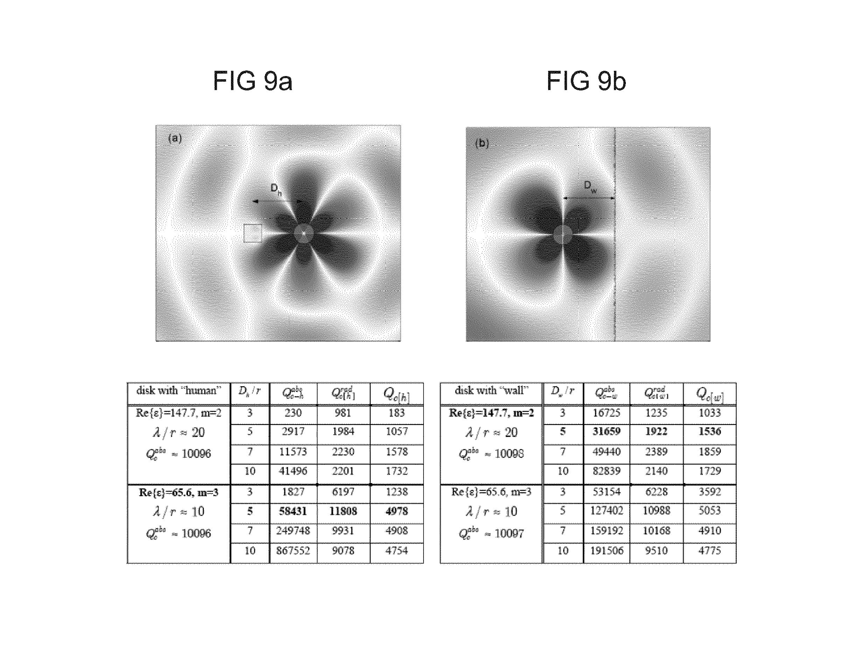

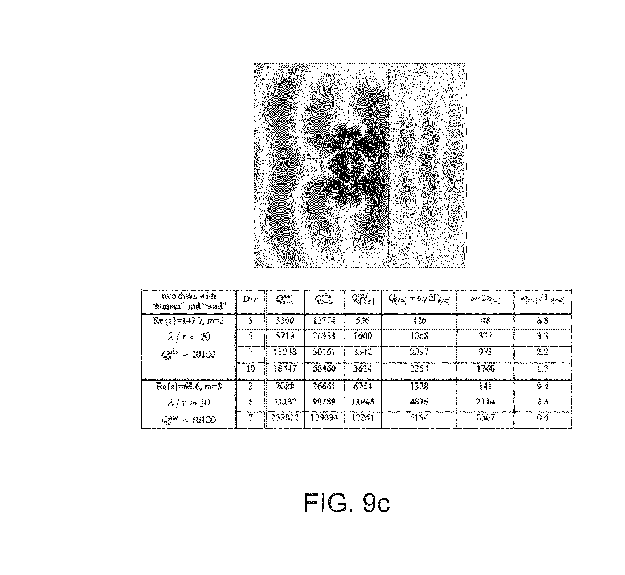

and depends *linearly* on the field tails $\mathbf{E}_1$ of 1 inside 2. This difference in scaling gives us confidence that, for, for example, exponentially small field tails, coupling to other resonant objects should be much faster than all extrinsic loss rates ($\kappa \, \square \, \Gamma_{1-e}$), at least for small perturbations, and thus the energy-transfer scheme is expected to be sturdy for this class of resonant dielectric disks. However, we also want to examine certain possible situations where extraneous objects cause perturbations too strong to analyze using the above first-order perturbation theory approach. For example, we place a dielectric disk c close to another off-resonance object of large Re{ε}, Im{ε} and of same size but different shape (such as a human being *h*), as shown in Fig. 9a, and a roughened surface of large extent but of small Re{ε}, Im{ε} (such as a wall *w*), as shown in Fig. 9b. For distances $Dh/w/r=10^{-3}$ between the disk-center and the "human"-center or "wall", the numerical FDFD simulation results presented in Figs. 9a and 9b suggest that, the disk resonance seems to be fairly robust, since it is not detrimentally disturbed by the presence of extraneous objects, with the exception of the *very* close proximity of high-loss objects. To examine the influence of large perturbations on an entire energy-transfer system we consider two resonant disks in the close presence of both a "human" and a "wall". Comparing Fig. 7 to Figure 9c, the numerical FDFD simulations show that the system performance deteriorates from κ/ Γc~1-50 to κ[*hw*]/Γc[*hw*] ~ 0.5-10 i.e. only by acceptably small amounts.

**System efficiency**

In general, another important factor for any energy transfer scheme is the transfer efficiency. Consider again the combined system of a resonant source *s* and device *d* in the presence of a set of extraneous objects *e*. The efficiency of this resonance-based energy-transfer scheme may be determined, when energy is being drained from the device at rate $G_{work}$ for use into operational work. The coupled-mode-theory equation for the device field-amplitude is

$$\frac{da_d}{dt} = -i\left(\omega - i\Gamma_{d[e]}\right)a_d + i\kappa_{[e]}a_s - \Gamma_{work}a_d, \tag{13}$$

where $G_{d[e]} = G_{d[e]}^{rad} + G_{d[e]}^{abs} = G_{d[e]}^{rad} + \left(G_d^{abs} + G_{d-e}^{abs}\right)$ is the net perturbed-device loss rate, and similarly we define $G_{s[e]}$ for the perturbed-source. Different temporal schemes can be used to extract power from the device (e.g. steady-state continuous-wave drainage, instantaneous drainage at periodic times and so on) and their efficiencies exhibit different dependence on the combined system parameters. For simplicity, we assume steady state, such that the field amplitude inside the source is maintained constant, namely $a_s(t) = A_s e^{-iwt}$, so then the field amplitude inside the device is $a_d(t) = A_d e^{-iwt}$ with $A_d / A_s = ik_{[e]}/(G_{d[e]} + G_{work})$. The various time-averaged powers of interest are then: the useful extracted power is $P_{work} = 2G_{work}|A_d|^2$, the radiated (including scattered) power is $P_{rad} = 2G_{s[e]}^{rad}|A_s|^2 + 2G_{d[e]}^{rad}|A_d|^2$, the power absorbed at the source/device is $P_{s/d} = 2G_{s/d}^{abs}|A_{s/d}|^2$, and at the extraneous objects $P_e = 2G_{s-e}^{abs}|A_s|^2 + 2G_{d-e}^{abs}|A_d|^2$.    From energy conservation, the total time-averaged power entering the system is $P_{total} = P_{work} + P_{rad} + P_s + P_d + P_e$. Note that the reactive powers, which are usually present in a system and circulate stored energy around it, cancel at resonance (which can be proven for example in electromagnetism from Poynting's Theorem) and do not influence the power-balance calculations. The working efficiency is then:

$$\eta_{work} \equiv \frac{P_{work}}{P_{total}} = \frac{1}{1 + \dfrac{G_{d[e]}}{G_{work}} \times \left[1 + \dfrac{1}{fom_{[e]}^2}\left(1 + \dfrac{G_{work}}{G_{d[e]}}\right)^2\right]}, \tag{14}$$

where $fom_{[e]} = k_{[e]}/\sqrt{G_{s[e]}G_{d[e]}}$ is the distance-dependent figure-of-merit of the perturbed resonant energy-exchange system.

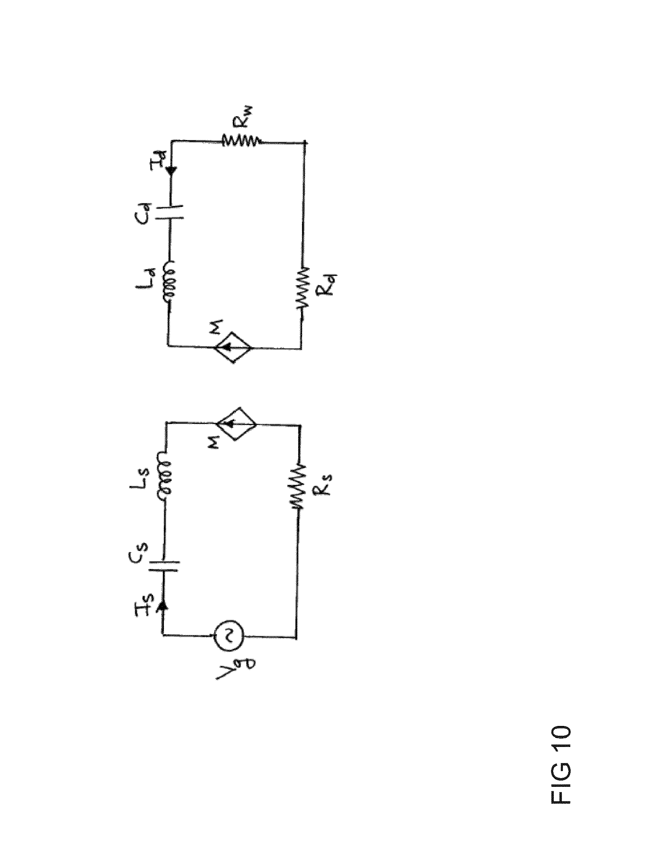

Referring to Fig. 10, to rederive and express this formula (14) in terms of the parameters which are more directly accessible from particular resonant objects, e.g. the capacitively-loaded conducting-wire loops, one can consider the following circuit-model of the system, where the inductances $L_s, L_d$ represent the source and device loops respectively, $R_s, R_d$ their respective losses, and $C_s, C_d$ are the required corresponding capacitances to achieve for both resonance at frequency ω. A voltage generator $V_g$ is considered to be connected to the source and a work (load) resistance $R_w$ to the device. The mutual inductance is denoted by *M*.

Then from the source circuit at resonance ($wL_s = 1/ wC_s$):

$$V_g = I_s R_s - jwMI_d \;\; \flat \;\; \frac{1}{2}V_g^* I_s = \frac{1}{2}\left|I_s\right|^2 R_s + \frac{1}{2}jwMI_d^* I_s,$$

and from the device circuit at resonance ($wL_d = 1/\, wC_d$):

$$0 = I_d\left(R_d + R_w\right) - jwMI_s \;\; \flat \;\; jwMI_s = I_d\left(R_d + R_w\right)$$

So by substituting the second to the first:

$$\frac{1}{2}V_g^* I_s = \frac{1}{2}\left|I_s\right|^2 R_s + \frac{1}{2}\left|I_d\right|^2\left(R_d + R_w\right).$$

Now we take the real part (time-averaged powers) to find the efficiency:

$$P_g \;\; ^\circ \;\; \mathrm{Re}\left\{\frac{1}{2}V_g^* I_s\right\} = P_s + P_d + P_w \;\; \flat \;\; h_{work} \;\; ^\circ \;\; \frac{P_w}{P_{tot}} = \frac{R_w}{\left|\dfrac{I_s}{I_d}\right|^2 \times R_s + R_d + R_w}.$$

Namely,

$$h_{work} = \frac{R_w}{\dfrac{\left(R_d + R_w\right)^2}{\left(wM\right)^2}\times R_s + R_d + R_w},$$

which with $G_{work} = R_w /\, 2L_d$, $G_d = R_d /\, 2L_d$, $G_s = R_s /\, 2L_s$, and $k = wM /\, 2\sqrt{L_s L_d}$,  becomes the general Eq.(14).

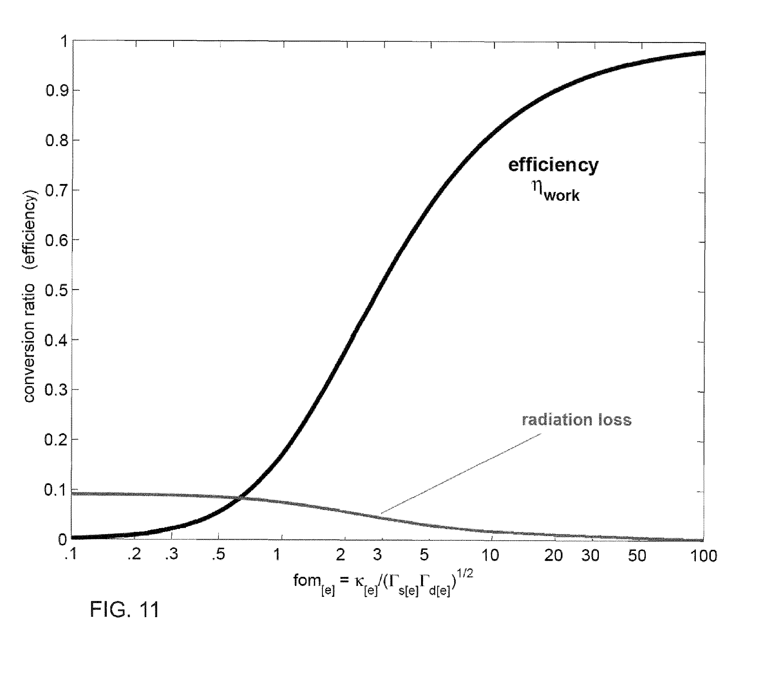

From Eq.(14) one can find that the efficiency is optimized in terms of the chosen work-drainage rate, when that is chosen to be $\Gamma_{work} /\, \Gamma_{d[e]} = \sqrt{1 + fom_{[e]}^2} > 1$ Then, $\eta_{work}$ is a function of the $fom_{[e]}$ parameter only as shown in Fig.11 with a solid black line. One can see that the efficiency of the system is $\eta_{work} > 17\%$ for $fom_{[e]} > 1$, large enough for practical applications. Thus, the efficiency can be further increased towards 100% by optimizing $fom_{[e]}$ as described above. The ratio of conversion into radiation loss depends also on the other system parameters, and is plotted in Fig. 5 for the conducting loops with values for their parameters within the ranges determined earlier.

For example, consider the capacitively loaded coil embodiments described in Table 4, with coupling distance $D/r = 7$, a "human" extraneous object at distance $D_h$ from the source, and that $P_{work} = 10W$ must be delivered to the load. Then, we have (based on Fig. 11) $Q_{s[h]}^{rad} = Q_{d[h]}^{rad} \sim 10^4$, $Q_s^{abs} = Q_d^{abs} \sim 10^3$, $Q_\kappa \sim 500$,, and $Q_{d-h}^{abs} \to \infty$, $Q_{s-h}^{abs} \sim 10^5$ at $D_h \sim 3cm$ and $Q_{s-h}^{abs} \sim 5 \cdot 10^5$ at $D_h \sim 10cm$. Therefore $fom_{[h]} \sim 2$, so we find $\eta_{work} \approx 38\%$, $P_{rad} \approx 1.5W$, $P_s \approx 11W$, $P_d \approx 4W$, and most importantly $\eta_h \approx 0.4\%$, $P_h = 0.1W$ at $D_h \sim 3cm$ and $\eta_h \approx 0.1\%$, $P_h = 0.02W$ at $D_h \sim 10cm$.

In many cases, the dimensions of the resonant objects will be set by the particular application at hand. For example, when this application is powering a laptop or a cell-phone, the device resonant object cannot have dimensions larger that those of the laptop or cell-phone respectively. In particular, for a system of two loops of specified dimensions, in terms of loop radii $r_{s,d}$ and wire radii $a_{s,d}$, the independent parameters left to adjust for the system optimization are: the number of turns $N_{s,d}$, the frequency $f$ and the work-extraction rate (load resistance) $\Gamma_{work}$.

In general, in various embodiments, the primary dependent variable that one wants to increase or optimize is

the overall efficiency $\eta_{work}$. However, other important variables need to be taken into consideration upon system design. For example, in embodiments featuring capacitively loaded coils, the design may be constrained by, for example, the currents flowing inside the wires $I_{s,d}$ and the voltages across the capacitors $V_{s,d}$. These limitations can be important because for ~*Watt* power applications the values for these parameters can be too large for the wires or the capacitors respectively to handle. Furthermore, the total loaded $Q_{tot} = \omega L_d/(R_d + R_w)$ of the device is a quantity that should be preferably small, because to match the source and device resonant frequencies to within their $Q$'s, when those are very large, can be challenging experimentally and more sensitive to slight variations. Lastly, the radiated powers $P_{rad,s,d}$ should be minimized for safety concerns, even though, in general, for a magnetic, non-radiative scheme they are already typically small.

In the following, we examine then the effects of each one of the independent variables on the dependent ones. We define a new variable *wp* to express the work-drainage rate for some particular value of $fom_{[e]}$ through

$$\Gamma_{work} / \Gamma_{d[e]} = \sqrt{1 + wp \cdot fom_{[e]}^2} \; .$$

Then, in some embodiments, values which impact the choice of this rate are: $\Gamma_{work} / \Gamma_{d[e]} = 1 \Leftrightarrow wp = 0$ (the common impedance-matching condition) to minimize the required energy stored in the source (and therefore $I_s$ and $V_s$),

$$\Gamma_{work} / \Gamma_{d[e]} = \sqrt{1 + fom_{[e]}^2} > 1 \Leftrightarrow wp = 1$$ to increase the efficiency, as seen earlier, or $\Gamma_{work} / \Gamma_{d[e]} \square 1 \Leftrightarrow wp \square 1$

to decrease the required energy stored in the device (and therefore $I_d$ and $V_d$) and to decrease or minimize $Q_{tot} = \omega L_d / (R_d + R_w) = \omega/[2(\Gamma_d + \Gamma_{work})]$.

Increasing $N_s$ and $N_d$ increases $\kappa / \sqrt{\Gamma_s \Gamma_d}$ and thus efficiency significantly, as seen before, and also decreases the currents $I_s$ and $I_d$, because the inductance of the loops increases, and thus the energy

$$U_{s,d} = \tfrac{1}{2} L_{s,d} \left| I_{s,d} \right|^2$$ required for given output power $P_{work}$ can be achieved with smaller currents. However, increasing $N_d$ increases $Q_{tot}$, $P_{rad,d}$ and the voltage across the device capacitance $V_d$, which unfortunately ends up being, in typical embodiments one of the greatest limiting factors of the system. To explain this, note that it is the electric field that really induces breakdown of the capacitor material (e.g. 3kV/mm for air) and not the voltage, and that for the desired (close to the optimal) operational frequency, the increased inductance $L_d$ implies reduced required capacitance $C_d$, which could be achieved in principle, for a capacitively-loaded device coil by increasing the spacing of the device capacitor plates $d_d$ and for a self-resonant coil by increasing through $h_d$ the spacing of adjacent turns, resulting in an electric field ($\approx V_d / d_d$ for the former case) that actually decreases with $N_d$; however, one cannot in reality increase $d_d$ or $h_d$ too much, because then the undesired capacitance fringing electric fields would become very large and/or the size of the coil might become too large; and, in any case, for certain applications extremely high voltages are not desired. A similar increasing behavior is observed for the source $P_{rad,s}$ and $V_s$ upon increasing $N_s$. As a conclusion, the number of turns $N_s$ and $N_d$ have to be chosen the largest possible (for efficiency) that allow for reasonable voltages, fringing electric fields and physical sizes.

With respect to frequency, again, there is an optimal one for efficiency, and $Q_{tot}$ is approximately maximum, close to that optimal frequency. For lower frequencies the currents get worse (larger) but the voltages and radiated powers get better (smaller). Usually, one should pick either the optimal frequency or somewhat lower.

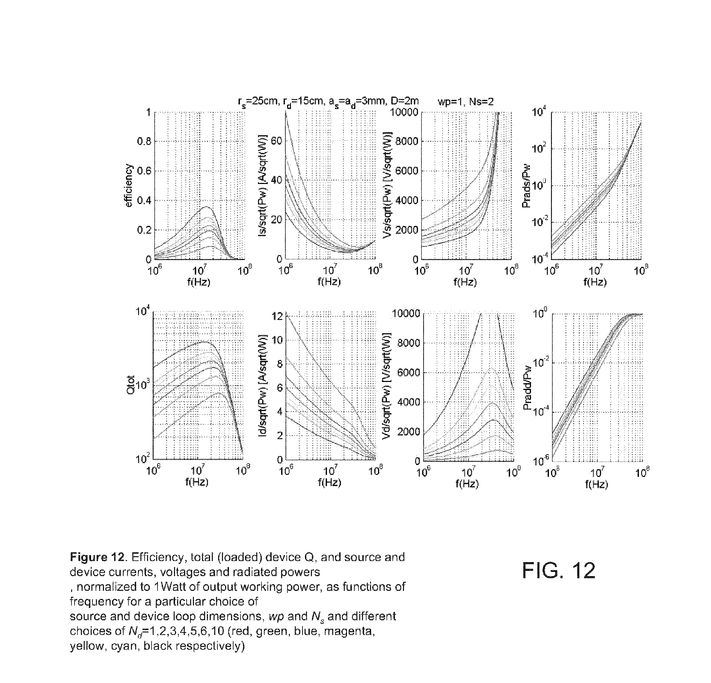

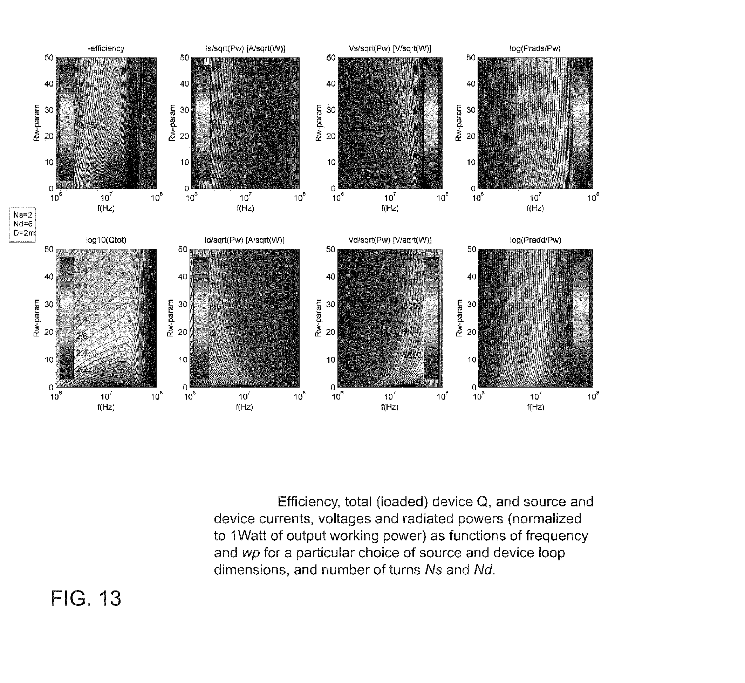

One way to decide on an operating regime for the system is based on a graphical method. In Fig. 12, for two loops of $r_s = 25cm$, $r_d = 15cm$, $h_s = h_d = 0$, $a_s = a_d = 3mm$ and distance $D = 2m$ between them, we plot all the above dependent variables (currents, voltages and radiated powers normalized to *1 Watt* of output power) in terms of frequency and $N_d$, given some choice for *wp* and $N_s$. The Figure depicts all of the dependences explained above. We can also make a contour plot of the dependent variables as functions of both frequency and *wp* but for both $N_s$ and $N_d$ fixed. The results are shown in Fig. 13 for the same loop dimensions and distance. For example, a reasonable choice of parameters for the system of two loops with the dimensions given above are: $N_s = 2$, $N_d = 6$, *f=10MHz* and *wp=10,* which gives the following performance characteristics:

$$\eta_{work} = 20.6\%, \; Q_{tot} = 1264, \quad I_s = 7.2A, I_d = 1.4A, \quad V_s = 2.55kV, V_d = 2.30kV,$$

$P_{rad,s} = 0.15W$, $P_{rad,d} = 0.006W$. Note that the results in Figures 12 and 13, and the just above calculated performance characteristics are made using the analytical formulas provided above, so they are expected to be less accurate for large values of $N_s$, $N_d$, still they give a good estimate of the scalings and the orders of magnitude.

Finally, one could additionally optimize for the source dimensions, since usually only the device dimensions are limited, as discussed earlier. Namely, one can add $r_s$ and $a_s$ in the set of independent variables and optimize with respect to these too for all the dependent variables of the problem (we saw how to do this only for efficiency earlier). Such an optimization would lead to improved results.

**Experimental Results**

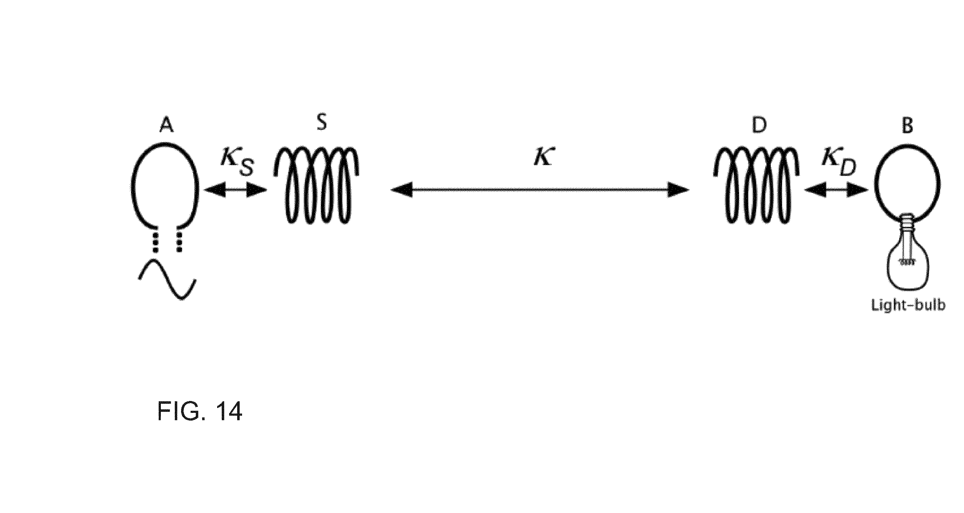

An experimental realization of an embodiment of the above described scheme for wireless energy transfer consists of two self-resonant coils of the type described above, one of which (the source coil) is coupled inductively to an oscillating circuit, and the second (the device coil) is coupled inductively to a resistive load, as shown schematically in Fig. 14. Referring to Fig. 14, $A$ is a single copper loop of radius 25cm that is part of the driving circuit, which outputs a sine wave with frequency 9.9MHz. $S$ and $D$ are respectively the source and device coils referred to in the text. $B$ is a loop of wire attached to the load ("light-bulb"). The various $\kappa$'s represent direct couplings between the objects. The angle between coil $D$ and the loop $A$ is adjusted so that their direct coupling is zero, while coils $S$ and $D$ are aligned coaxially. The direct coupling between $B$ and $A$ and between $B$ and $S$ is negligible.

The parameters for the two identical helical coils built for the experimental validation of the power transfer scheme were $h$ = 20 cm, $a$ = 3 mm, $r$ = 30 cm, $n$ = 5.25 . Both coils are made of copper. Due to imperfections in the construction, the spacing between loops of the helix is not uniform, and we have encapsulated the uncertainty about their uniformity by attributing a 10% (2 cm) uncertainty to $h$. The expected resonant frequency given these dimensions is $f_0$ = 10.56 $\pm$ 0.3 MHz, which is about 5% off from the measured resonance at around 9.90MHz.

The theoretical $Q$ for the loops is estimated to be : 2500 (assuming perfect copper of resistivity $\rho$ =1.7$\times$10$^{-8}$ $\Omega$m) but the measured value is 950 $\pm$ 50. We believe the discrepancy is mostly due to the effect of the layer of poorly conducting copper oxide on the surface of the copper wire, to which the current is confined by the short skin depth (: 20 $\mu$m) at this frequency. We have therefore used the experimentally observed $Q$ (and $\Gamma_1$ = $\Gamma_2$ = $\Gamma$ = $\omega/(2Q)$ derived from it) in all subsequent computations.

The coupling coefficient $\kappa$ can be found experimentally by placing the two self-resonant coils (fine-tuned, by slightly adjusting $h$, to the same resonant frequency when isolated) a distance $D$ apart and measuring the splitting in the frequencies of the two resonant modes. According to coupled-mode theory, the splitting should be

$$\Delta\omega = 2\sqrt{\kappa^2 - \Gamma^2}$$

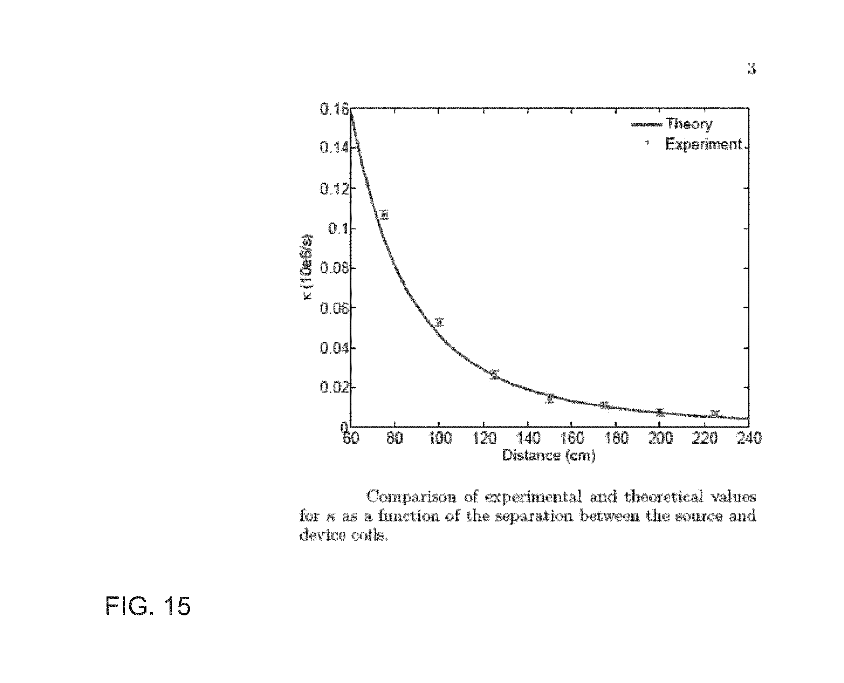

. The comparison between experimental and theoretical results as a function of distance when the two the coils are aligned coaxially is shown in Fig.15.

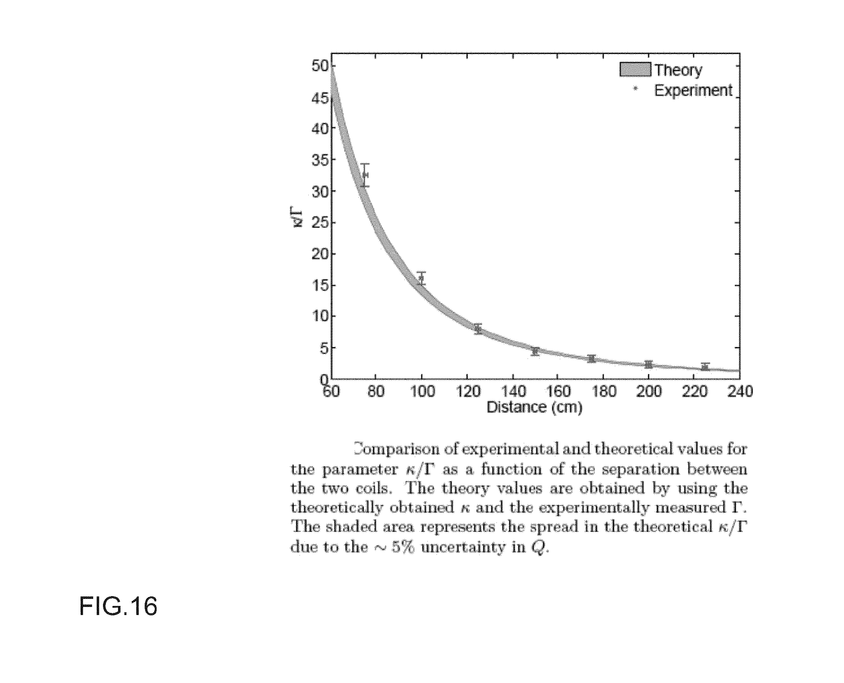

Fig. 16 shows a comparison of experimental and theoretical values for the parameter $\kappa/\Gamma$ as a function of the separation between the two coils. The theory values are obtained by using the theoretically obtained $\kappa$ and the experimentally measured $\Gamma$. The shaded area represents the spread in the theoretical $\kappa/\Gamma$ due to the : 5% uncertainty in $Q$.

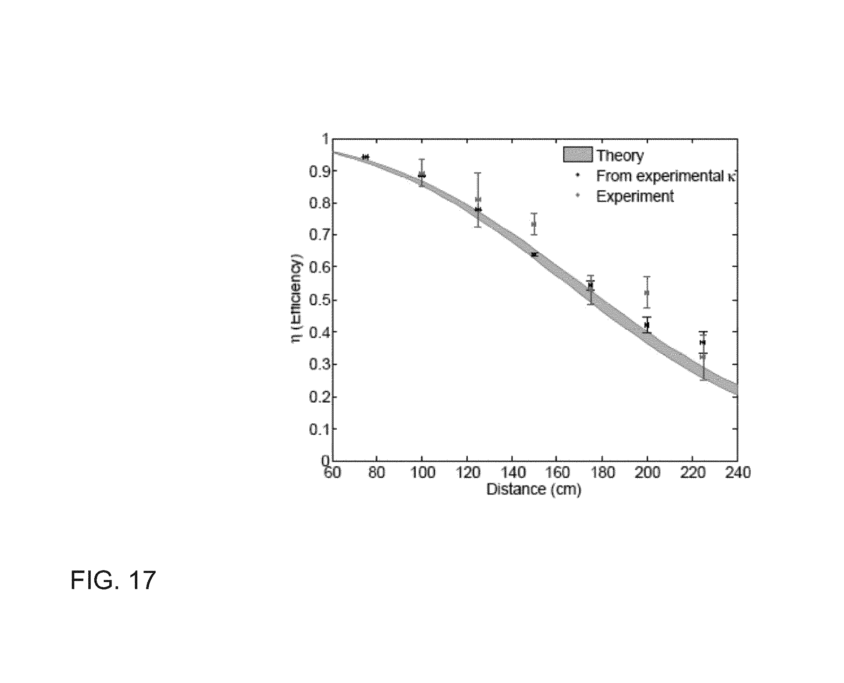

As noted above, the maximum theoretical efficiency depends only on the parameter $\kappa/\sqrt{\Gamma_1\Gamma_2} = \kappa/\Gamma$ , plotted as a function of distance in Fig. 17. The coupling to loss ratio $\kappa/\Gamma$ is greater than 1 even for $D$ = 2.4 m (eight times the radius of the coils), thus the sytem is in the strongly-coupled regime throughout the entire range of distances probed.

The power supply circuit was a standard Colpitts oscillator coupled inductively to the source coil by means of a single loop of copper wire 25cm in radius (see Fig. 14). The load consisted of a previously calibrated light-bulb, and was attached to its own loop of insulated wire, which was in turn placed in proximity of the device coil and inductively coupled to it. Thus, by varying the distance between the light-bulb and the device coil, the parameter $\Gamma_w/\Gamma$ was adjusted so that it matched its optimal value, given theoretically by $\sqrt{1 + \kappa^2/(\Gamma_1\Gamma_2)}$ . Because of its inductive nature, the loop connected to the light-bulb added a small reactive component to $\Gamma_w$ which was compensated for by slightly retuning the coil. The work extracted was determined by adjusting the power going into the Colpitts oscillator until the light-bulb at the load was at its full nominal brightness.

In order to isolate the efficiency of the transfer taking place specifically between the source coil and the load, we measured the current at the mid-point of each of the self-resonant coils with a current-probe (which was not found to lower the Q of the coils noticeably.) This gave a measurement of the current parameters $I_1$ and $I_2$ defined above. The power dissipated in each coil was then computed from $P_{1,2} = \Gamma L |I_{1,2}|^2$, and the efficiency was directly obtained from $\eta$ = $P_w/(P_1 + P_2 + P_w)$. To ensure that the experimental setup was well described by a two-object coupled-mode theory model, we positioned the device coil such that its direct coupling to the copper loop attached to the Colpitts oscillator was zero. The experimental results are shown in Fig. 17 , along with the theoretical prediction for maximum efficiency, given by Eq..(14).

Using this embodiment, we were able to transfer significant amounts of power using this setup, fully lighting up a 60W light-bulb from distances more than 2m away, for example. As an additional test, we also measured the total power going into the driving circuit. The efficiency of the wireless transfer itself was hard to estimate in this way, however, as the efficiency of the Colpitts oscillator itself is not precisely known, although it is expected to be far from 100%. Nevertheless, this gave an overly conservative lower bound on the efficiency. When transferring 60W to the load over a distance of 2m, for example, the power flowing into the driving circuit was 400W. This yields an overall wall-to-load efficiency of : 15%, which is reasonable given the expected : 40% efficiency for the wireless power transfer at that distance and the low efficiency of the driving circuit.

From the theoretical treatment above, we see that in typical embodiments it is important that the coils be on resonance for the power transfer to be practical. We found experimentally that the power transmitted to the load dropped sharply as one of the coils was detuned from resonance. For a fractional detuning $\Delta f/f_0$ of a few times the inverse loaded $Q$, the induced current in the device coil was indistinguishable from noise.

The power transfer was not found to be visibly affected as humans and various everyday objects, such as metallic and wooden furniture, as well as electronic devices large and small, were placed between the two coils, even when they drastically obstructed the line of sight between source and device. External objects were found to have an effect only when they were closer than 10cm from either one of the coils. While some materials (such as aluminum foil, styrofoam and humans) mostly just shifted the resonant frequency, which could in principle be easily corrected with a feedback circuit of the type described above, others (cardboard, wood, and PVC) lowered $Q$ when placed closer than a few centimeters from the coil, thereby lowering the efficiency of the transfer.

We believe that this method of power transfer should be safe for humans. When transferring 60W (more than enough to power a laptop computer) across 2m, we estimated that the magnitude of the magnetic field generated is much weaker than the Earth's magnetic field for all distances except for less than about 1 cm away from the wires in the coil, an indication of the safety of the scheme even after long-term use. The power radiated for these parameters was : 5 W, which is roughly an order of magnitude higher than cell phones but could be drastically reduced, as discussed below.

Although the two coils are currently of identical dimensions, it is possible to make the device coil small enough to fit into portable devices without decreasing the efficiency. One could, for instance, maintain the product of the characteristic sizes of the source and device coils constant..

These experiments demonstrated experimentally a system for power transfer over medium range distances, and found that the experimental results match theory well in multiple independent and mutually consistent tests.

We believe that the efficiency of the scheme and the distances covered could be appreciably improved by silver-plating the coils, which should increase their $Q$, or by working with more elaborate geometries for the resonant objects. Nevertheless, the performance characteristics of the system presented here are already at levels where they could be useful in practical applications.

## Applications

In conclusion, we have described several embodiments of a resonance-based scheme for wireless non-radiative energy transfer. Although our consideration has been for a static geometry (namely $\kappa$ and $\Gamma_e$ were independent of time), all the results can be applied directly for the dynamic geometries of mobile objects, since the energy-transfer time $\kappa^{-1}$ (~1$\mu$s -1ms for microwave applications) is much shorter than any timescale associated with motions of macroscopic objects. Analyses of very simple implementation geometries provide encouraging performance characteristics and further improvement is expected with serious design optimization. Thus the proposed mechanism is promising for many modem applications.

For example, in the macroscopic world, this scheme could potentially be used to deliver power to for example, robots and/or computers in a factory room, or electric buses on a highway. In some embodiments source-object could be an elongated "pipe" running above the highway, or along the ceiling.

Some embodiments of the wireless transfer scheme can provide energy to power or charge devices that are difficult of impossible to reach using wires or other techniques. For example some embodiments may provide power to implanted medical devices (e.g. artificial hearts, pacemakers, medicine delivery pumps, etc.) or buried underground sensors

In the microscopic world, where much smaller wavelengths would be used and smaller powers are needed, one could use it to implement optical inter-connects for CMOS electronics, or to transfer energy to autonomous nano-objects (e.g. MEMS or nano-robots) without worrying much about the relative alignment between the sources and the devices. Furthermore, the range of applicability could be extended to acoustic systems, where the source and device are connected via a common condensed-matter object.

In some embodiments, the techniques described above can provide non radiative wireless transfer of information using the localizde near fields of resonant object. Such schemes provide increased security because no information is radiated into the far-field, and are well suited for mid-range communication of highly sensitive information.

A number of embodiments of the invention have been described. Nevertheless, it will be understood that various modifications may be made without departing from the spirit and scope of the invention.

References

Haus, H. A. Waves and Fields in Optoelectronics (Prentice-Hall, New Jersey, 1984).

Balanis, C. A. Antenna Theory: Analysis and Design (Wiley, New Jersey, 2005).

S. Sensiper. Electromagnetic wave propagation on helical conductors. PhD Thesis, Massachusetts Institute of Technology, 1951.

Jackson, J. D. Classical Electrodynamics (Wiley, New York, 1999).

Although the present invention is defined in the attached embodiments, it is to be understood that the invention can alternatively also be defined in accordance with the following embodiments:

1. An apparatus for use in wireless energy transfer, the apparatus comprising:

a first resonator structure configured to transfer energy non-radiatively with a second resonator structure over a distance $D$ greater than a characteristic size $L_1$ of the first resonator structure and greater than a characteristic size $L_2$ of the second resonator structure,
wherein the non-radiative energy transfer is mediated by a coupling of a resonant field evanescent tail of the first resonator structure and a resonant field evanescent tail of the second resonator structure.

2. The apparatus of embodiment 1, wherein the first resonator structure is configured to transfer energy to the second resonator structure.

3. The apparatus of embodiment 1, wherein the first resonator structure is configured to receive energy from the second resonator structure.

4. The apparatus of any of embodiments 1, 2, and 3, further comprising the second resonator structure.

5. The apparatus of embodiment of any of embodiments 1, 2, 3, and 4, wherein the first resonator structure has a resonant frequency $\omega_1$, a Q-factor $Q_1$, and a resonance width $\Gamma_1$,
the second resonator structure has a resonant frequency $\omega_2$, a Q-factor $Q_2$, and a resonance width $\Gamma_2$, and
the non-radiative transfer has a rate $\kappa$.

6. The apparatus of embodiment 5, wherein the frequencies $\omega_1$ and $\omega_2$ are about within the narrower of the resonant widths $\Gamma_1$ and $\Gamma_2$.

7. The apparatus of embodiment 6, wherein $Q_1 > 100$ and $Q_2 > 100$.

8. The apparatus of embodiment 7, wherein $Q_1 > 200$ and $Q_2 > 200$.

9. The apparatus of embodiment 8, wherein $Q_1 > 500$ and $Q_2 > 500$.

10. The apparatus of embodiment 9, wherein $Q_1 > 1000$ and $Q_2 > 1000$.

11. The apparatus of embodiment 7, wherein $Q_1 > 200$ or $Q_2 > 200$

12. The apparatus of embodiment 7 wherein $Q_1 > 500$ or $Q_2 > 500$.

13. The apparatus of embodiment 7 wherein $Q_1 > 1000$ or $Q_2 > 1000$.

14. The apparatus of any of embodiments 6 through 13, wherein the coupling to loss ratio $\dfrac{\kappa}{\sqrt{\Gamma_1 \Gamma_2}} > 0.5$.

15. The apparatus of any of embodiments 6 through 13, wherein the coupling to loss ratio $\dfrac{\kappa}{\sqrt{\Gamma_1 \Gamma_2}} > 1$.

16. The apparatus of any of embodiments 6 through 13, wherein the coupling to loss ratio $\dfrac{\kappa}{\sqrt{\Gamma_1 \Gamma_2}} > 2$.

17. The apparatus of any of embodiments 6 through 13, wherein the coupling to loss ratio $\dfrac{\kappa}{\sqrt{\Gamma_1 \Gamma_2}} > 5$.

18. The apparatus of any of embodiments 1 through 17, wherein $D/L_2$ is as large as 2.

19. The apparatus of any of embodiments 1 through 17, wherein $D/L_2$ is as large as 3.

20. The apparatus of any of embodiments 1 through 17, wherein $D/L_2$ is as large as 5.

21. The apparatus of any of embodiments 1 through 17, wherein $D/L_2$ is as large as 7.

22. The apparatus of any of embodiments 1 through 17, wherein $D/L_2$ is as large as 10.

23. The apparatus of any of embodiments 6 through 12, wherein $Q_1 > 1000$, $Q_2 > 1000$, and the coupling to loss

ratio $\dfrac{\kappa}{\sqrt{\Gamma_1 \Gamma_2}} > 10$. .

24. The apparatus of any of embodiments 6 through 12, wherein $Q_1 > 1000$, $Q_2 > 1000$, and coupling to loss ratio

$\dfrac{\kappa}{\sqrt{\Gamma_1 \Gamma_2}} > 25$.

25. The apparatus of any of embodiments 6 through 12, wherein $Q_1 > 1000$, $Q_2 > 1000$, and the coupling to loss

ratio $\dfrac{\kappa}{\sqrt{\Gamma_1 \Gamma_2}} > 40$. .

26. The apparatus of any of embodiments 23 through 25, wherein $D/L_2$ is as large as 3.

27. The apparatus of any of embodiments 23 through 24, wherein $D/L_2$ is as large as 7.

28. The apparatus of embodiment 23, wherein $D/L_2$ is as large as 10.

29. The apparatus of any of embodiments 1 through 28, wherein the energy transfer operates with an efficiency $\eta_w$ greater than about 1%.

30. The apparatus of any of embodiments 1 through 28, wherein the energy transfer operates with an efficiency $\eta_w$ greater than about 10%.

31. The apparatus of any of embodiments 1 through 28, wherein the energy transfer operates with an efficiency $\eta_w$ greater than about 20%.

32. The apparatus of any of embodiments 1 through 28, wherein the energy transfer operates with an efficiency $\eta_w$ greater than about 30%.

33. The apparatus of any of embodiments 1 through 28, wherein the energy transfer operates with an efficiency $\eta_w$ greater than about 80%.

34. The apparatus of any of embodiments 1 through 28, wherein the energy transfer operates with a radiation loss $\eta_{rad}$ less that about 10%.

35. The apparatus of any of embodiments 6 through 28, wherein the energy transfer operates with a radiation loss $\eta_{rad}$ less that about 10%, and the coupling to loss ratio $\dfrac{\kappa}{\sqrt{\Gamma_1 \Gamma_2}} \geq 0.1$.

36. The apparatus of any of embodiments 1 through 28, wherein the wherein the energy transfer operates with a radiation loss $\eta_{rad}$ less that about 1%.

37. The apparatus any of embodiments 6 through 28, wherein the wherein the energy transfer operates with a radiation loss $\eta_{rad}$ less that about 1%, and the coupling to loss ratio $\dfrac{\kappa}{\sqrt{\Gamma_1 \Gamma_2}} \geq 1$.

38. The apparatus of any of embodiments 1 to 28, wherein, in the presence of a human at distance of more than 3cm from the surface of either resonant object, the energy transfer operates with a loss to the human $\eta_h$ of less than about 1%.

39. The apparatus of any of embodiments 6 through 28, wherein, in the presence of a human at distance of more than 3cm from the surface of either resonant object, the energy transfer operates with a loss to the human $\eta_h$ of less than about 1% and the coupling to loss ratio $\dfrac{\kappa}{\sqrt{\Gamma_1 \Gamma_2}} \geq 1$.

40. The apparatus of any of embodiments 1 to 28, wherein, in the presence of a human at distance of more than 10cm from the surface of either resonant object, the energy transfer operates with a loss to the human $\eta_h$ of less than about 0.2%.

41. The apparatus of any of embodiments 6 through 28, wherein, in the presence of a human at distance of more than 10cm from the surface of either resonant obj ect, the energy transfer operates with a loss to the human $\eta_h$ of less than about 0.2% and the coupling to loss ratio $\dfrac{\kappa}{\sqrt{\Gamma_1 \Gamma_2}} \geq 1$.

42. The apparatus of any of embodiments 1 through 41, wherein, during operation, a power source coupled to the first or second resonator structure drives the resonator structure at a frequency $f$.

43. The apparatus of embodiments 42, further comprising the power source.

44. The apparatus of any of embodiments 42 through 43, wherein $f$ is about the optimum efficiency frequency.

45. The apparatus of any of embodiments 42 through 43, wherein $f$ is about 50 GHz or less.

46. The apparatus of any of embodiments 42 through 43, wherein $f$ is about 1 GHz or less.

47. The apparatus of any of embodiments 42 through 43, wherein $f$ is about 100 MHz or less.

48. The apparatus of any of embodiments 42 through 43, wherein $f$ is about 10 MHz or less.

49. The apparatus of any of embodiments 42 through 43, wherein $f$ is about 1 MHz or less.

50. The apparatus of any of embodiments 42 through 43, wherein $f$ is about 100 KHz or less.

51. The apparatus of any of embodiments 42 through 43, wherein $f$ is about 10 kHz or less.

52. The apparatus of any of embodiments 42 through 43, wherein $f$ is about 50 GHz or greater.

53. The apparatus of any of embodiments 42 through 43, wherein $f$ is about 1 GHz or greater.

54. The apparatus of any of embodiments 42 through 43, wherein $f$ is about 100 MHz or greater.

55. The apparatus of any of embodiments 42 through 43, wherein $f$ is about 10 MHz or greater.

56. The apparatus of any of embodiments 42 through 43, wherein $f$ is about 1 MHz or greater.

57. The apparatus of any of embodiments 42 through 43, wherein $f$ is about 100 kHz or greater.

58. The apparatus of any of embodiments 42 through 43, wherein $f$ is about 10 kHz or greater.

59. The apparatus of any of embodiments 1 through 58, wherein, during operation, one of the resonator structures receives a usable power $P_w$ from the other resonator structure.

60. The apparatus of embodiment 59, wherein $P_w$ is greater than about 0.01 Watt.

61. The apparatus of embodiment 59, wherein $P_w$ is greater than about 0.1 Watt.

62. The apparatus of embodiment 59, wherein $P_w$ is greater than about 1 Watt.

63. The apparatus of embodiment 59, wherein $P_w$ is greater than about 10 Watt.

64. The apparatus of any of embodiments 6 through 63 wherein $Q_\kappa = \omega/2\kappa$ is less than about 50.

65. The apparatus of any of embodiments 6 through 63 wherein $Q_\kappa = \omega/2\kappa$ is less than about 200.

66. The apparatus of any of embodiments 6 through 63 wherein $Q_\kappa = \omega/2\kappa$ is less than about 500.

67. The apparatus of any of embodiments 6 through 63, wherein $Q_\kappa = \omega/2\kappa$ is less than about 1000.

68. The apparatus of any of embodiments 64 through 67, wherein $D/L_2$ is as large as 3.

69. The apparatus of any of embodiments 64 through 67, wherein $D/L_2$ is as large as 5.

70. The apparatus of any of embodiments 64 through 67, wherein $D/L_2$ is as large as 7.

71. The apparatus of any of embodiments 64 through 67, wherein $D/L_2$ is as large as 10.

72. The apparatus of any of embodiments 1 through 71, wherein one of the first and second resonator structures comprise capacitively loaded conductive coils.

73. The apparatus of embodiment 72, wherein both of the first and second resonator structures comprise capacitively loaded conductive coils.

74. The apparatus of any of embodiments 72 and 73, wherein, during operation, one of the resonator structures receives a usable power $P_w$ from the other resonator structure, an electrical current $I_s$ flows in the resonator structure which is transferring energy to the other resonant structure, and the ratio $\dfrac{I_s}{\sqrt{P_w}}$ is less than about 5 $Amps/\sqrt{Watts}$ .

75. The apparatus of any of embodiments 72 and 73, wherein, during operation, one of the resonator structures receives a usable power $P_w$ from the other resonator structure, an electrical current $I_s$ flows in the resonator structure which is transferring energy to the other resonant structure, and the ratio $\dfrac{I_s}{\sqrt{P_w}}$ is less than about 2 $Amps/\sqrt{Watts}$ .

76. The apparatus of any of embodiments 72 and 73, wherein, during operation, one of the resonator structures receives a usable power $P_w$ from the other resonator structure, a voltage difference $V_s$ appears across the capacitive load of the first resonator structure $V_s$, and the ratio $\dfrac{V_s}{\sqrt{P_w}}$ is less than about 2000 $Volts/\sqrt{Watts}$ .

77. The apparatus of any of embodiments 72 and 73, wherein, during operation, one of the resonator structures receives a usable power $P_w$ from the other resonator structure, a voltage difference $V_s$ appears across the capacitive load of the first resonator structure $V_s$, and the ratio $\dfrac{V_s}{\sqrt{P_w}}$ is less than about 4000 $Volts/\sqrt{Watts}$ .

78. The apparatus of any of embodiments 72 and 73, wherein both of the first and second resonator structures comprise capacitively loaded conductive coils, and $Q_1 > 200$ and $Q_2 > 200$.

79. The apparatus of embodiment 78, wherein the characteristic size $L_R$ of the resonator structure receiving energy from the other resonator structure is less than about 1 cm and the width of the conductive coil of said object is less than about 1mm, and, during operation, a power source coupled to the first or second resonator structure drives the resonator structure at a frequency $f$.

80. The apparatus of embodiment 79, wherein $f$ is about 380MHz.

81. The apparatus of any of embodiments 79 and 80, wherein the coupling to loss ratio $\dfrac{\kappa}{\sqrt{\Gamma_1 \Gamma_2}} \geq 14.9$ .

82. The apparatus of any of embodiments 79 and 80, wherein the coupling to loss ratio $\dfrac{\kappa}{\sqrt{\Gamma_1 \Gamma_2}} \geq 3.2$ .

83. The apparatus of any of embodiments 79 and 80, wherein the coupling to loss ratio $\dfrac{\kappa}{\sqrt{\Gamma_1 \Gamma_2}} \geq 1.2$ .

84. The apparatus of any of embodiments 79 and 80, wherein the coupling to loss ratio $\dfrac{\kappa}{\sqrt{\Gamma_1 \Gamma_2}} \geq 0.4$ .

85. The apparatus of embodiment 78, wherein the characteristic size of the resonator structure receiving energy from the other resonator structure $L_R$ is less than about 10 cm and the width of the conductive coil of said object is less than about 2mm, and, during operation, a power source coupled to the first or second resonator structure drives the resonator structure at a frequency $f$.

86. The apparatus of embodiment 85, wherein $f$ is about 43 MHz.

87. The apparatus of any of embodiments 85 and 86, wherein the coupling to loss ratio $\dfrac{\kappa}{\sqrt{\Gamma_1\Gamma_2}} \geq 15.9$.

88. The apparatus of any of embodiments 85 and 86, wherein the coupling to loss ratio $\dfrac{\kappa}{\sqrt{\Gamma_1\Gamma_2}} \geq 4.3$.

89. The apparatus of any of embodiments 85 and 86, wherein the coupling to loss ratio $\dfrac{\kappa}{\sqrt{\Gamma_1\Gamma_2}} \geq 1.8$.

90. The apparatus of any of embodiments 85 and 86, wherein the coupling to loss ratio $\dfrac{\kappa}{\sqrt{\Gamma_1\Gamma_2}} \geq 0.7$.

91. The apparatus of embodiment 78, wherein the characteristic size $L_R$ of the resonator structure receiving energy from the other resonator structure is less than about 30 cm and the width of the conductive coil of said object is less than about 2cm, and, during operation, a power source coupled to the first or second resonator structure drives the resonator structure at a frequency $f$.

92. The apparatus of embodiment, 91 wherein $f$ is about 9 MHz..

93. The apparatus of any of embodiments 91 and 92, wherein the coupling to loss ratio $\dfrac{\kappa}{\sqrt{\Gamma_1\Gamma_2}} \geq 67.4$.

94. The apparatus of any of embodiments 91 and 92, wherein the coupling to loss ratio $\dfrac{\kappa}{\sqrt{\Gamma_1\Gamma_2}} \geq 17.8$.

95. The apparatus of any of embodiments 91 and 92, wherein the coupling to loss ratio $\dfrac{\kappa}{\sqrt{\Gamma_1\Gamma_2}} \geq 7.1$.

96. The apparatus of any of embodiments 91 and 92, wherein the coupling to loss ratio $\dfrac{\kappa}{\sqrt{\Gamma_1\Gamma_2}} \geq 2.7$.

97. The apparatus of embodiment 78, wherein the characteristic size of the resonator structure receiving energy from the other resonator structure $L_R$ is less than about 30 cm and the width of the conductive coil of said object is less than about 2mm, and, during operation, a power source coupled to the first or second resonator structure drives the resonator structure at a frequency $f$.

98. The apparatus of embodiment 98, wherein $f$ is about 17 MHz.

99. The apparatus of any of embodiments 97 and 98, wherein the coupling to loss ratio $\dfrac{\kappa}{\sqrt{\Gamma_1\Gamma_2}} \geq 6.3$.

100. The apparatus of any of embodiments 97 and 98, wherein the coupling to loss ratio $\dfrac{\kappa}{\sqrt{\Gamma_1\Gamma_2}} \geq 1.3$.

101. The apparatus of any of embodiments 97 and 98, wherein the coupling to loss ratio $\dfrac{\kappa}{\sqrt{\Gamma_1\Gamma_2}} \geq 0.5$.

102. The apparatus of any of embodiments 97 and 98, wherein the coupling to loss ratio $\dfrac{\kappa}{\sqrt{\Gamma_1 \Gamma_2}} \geq 0.2$.

103. The apparatus of embodiment 78, wherein the characteristic size $L_R$ of the resonator structure receiving energy from the other resonator structure is less than about 1m, and the width of the conductive coil of said object is less than about 2mm, and, during operation, a power source coupled to the first or second resonator structure drives the resonator structure at a frequency $f$.

104. The apparatus of embodiment 103 wherein $f$ is about 5MHz.

105. The apparatus of any of embodiments 103 and 104, wherein the coupling to loss ratio $\dfrac{\kappa}{\sqrt{\Gamma_1 \Gamma_2}} \geq 6.8$.

106. The apparatus of any of embodiments 103 and 104, wherein the coupling to loss ratio $\dfrac{\kappa}{\sqrt{\Gamma_1 \Gamma_2}} \geq 1.4$.

107. The apparatus of any of embodiments 103 and 104, wherein the coupling to loss ratio $\dfrac{\kappa}{\sqrt{\Gamma_1 \Gamma_2}} \geq 0.5$.

108. The apparatus of any of embodiments 103 and 104, wherein the coupling to loss ratio $\dfrac{\kappa}{\sqrt{\Gamma_1 \Gamma_2}} \geq 0.2$.

109. The apparatus any of any of embodiments 81 through 84, 87 through 90, 93 through 96, 99 through 102, and 105 through 108, wherein $D/L_R$ is as large as about 3

110. The apparatus any of any of embodiments 82 through 84, 88 through 90, 94 through 96, 100 through 102, and 106 through 108, wherein $D/L_R$ is as large as about 5

111. The apparatus any of any of embodiments 83 through 84, 89 through 90, 95 through 96, 101 through 102, and 107 through 108, wherein $D/L_R$ is as large as about 7

112. The apparatus any of any of embodiments 84, 90, 96, 102, and 108 wherein $D/L_R$ is as large as about 10.

113. The apparatus of embodiment 6, wherein both of the first and second resonator structures comprise dielectric disks.

114. The apparatus of embodiment 113, wherein the characteristic size of the resonator structure receiving energy from the other resonator structure is $L_R$ and the real part of the permittivity of said resonator structure $\varepsilon$ is less than about 150.

115. The apparatus of embodiment 113, wherein the coupling to loss ratio $\dfrac{\kappa}{\sqrt{\Gamma_1 \Gamma_2}} \geq 42.4$.

116. The apparatus of embodiment 113, wherein the coupling to loss ratio $\dfrac{\kappa}{\sqrt{\Gamma_1 \Gamma_2}} \geq 6.5$.

117. The apparatus of embodiment 113, wherein the coupling to loss ratio $\dfrac{\kappa}{\sqrt{\Gamma_1 \Gamma_2}} \geq 2.3$.

118. The apparatus of embodiment 113, the coupling to loss ratio $\dfrac{\kappa}{\sqrt{\Gamma_1 \Gamma_2}} \geq 0.5$.

119. The apparatus of embodiment 113, wherein the characteristic size $L_R$ of the resonator structure receiving energy from the other resonator structure is and the real part of the permittivity of said resonator structure $\varepsilon$ is less than about 70.

120. The apparatus of embodiment 119, wherein the coupling to loss ratio $\dfrac{\kappa}{\sqrt{\Gamma_1 \Gamma_2}} \geq 30.9$ .

121. The apparatus of embodiment 119, wherein the coupling to loss ratio $\dfrac{\kappa}{\sqrt{\Gamma_1 \Gamma_2}} \geq 2.3$ .

122. The apparatus of embodiment 119, wherein the coupling to loss ratio $\dfrac{\kappa}{\sqrt{\Gamma_1 \Gamma_2}} \geq 0.5$ .

123. The apparatus of any of embodiments 116 through 118, and 121 through 122, wherein $D/L_R$ is as large as about 3.

124. The apparatus of any of embodiments and 117 through 118, and 122, wherein $D/L_R$ is as large as about 5.

125. The apparatus of any of embodiments 117 through 118 wherein $D/L_R$ is as large as about 7.

126. The apparatus of any of embodiments 113 through 125, wherein the real part of the permittivity of the resonator structure configured to receiving energy from the other resonator structure $\varepsilon$ is less than about 65.

127. The apparatus of any of embodiments 1 through 71, wherein one of the first and second resonator structures comprise self resonant conducting wire coil.

128. The apparatus of embodiment 127, wherein both of the first and second resonator structures comprise self resonant conducting wire coils.

129. The apparatus of any of embodiments 127 and 128, wherein one or more of the self resonant conductive wire coils comprise a wire of length $l$ and cross section radius wound into a helical coil of radius $r$, height $h$ and number of turns $N$.

130. The apparatus of embodiment 129, wherein $N = \sqrt{l^2 - h^2} / 2\pi r$

131. The apparatus of any of embodiments 129 through 130, wherein both of the first and second resonator structures comprise self resonant conducting wire coils , and $Q_1 > 200$ and $Q_2 > 200$.

132. The apparatus of embodiment 131, wherein, for each resonant structure $r$ is about 30cm, $h$ is about 20cm, $a$ is about 3mm and $N$ is about 5.25, and ,during operation, a power source coupled to the first or second resonator structure drives the resonator structure at a frequency $f$.

133. The apparatus of embodiment 132, wherein $f$ is about 10.6 MHz.

134. The apparatus of any of embodiments 79 and 80, wherein the coupling to loss ratio $\dfrac{\kappa}{\sqrt{\Gamma_1 \Gamma_2}} \geq 40$ .

135. The apparatus of any of embodiments 79 and 80, wherein the coupling to loss ratio $\dfrac{\kappa}{\sqrt{\Gamma_1 \Gamma_2}} \geq 15$ .

136. The apparatus of any of embodiments 79 and 80, wherein the coupling to loss ratio $\dfrac{\kappa}{\sqrt{\Gamma_1 \Gamma_2}} \geq 5$ .

137. The apparatus of any of embodiments 79 and 80, wherein the coupling to loss ratio $\dfrac{\kappa}{\sqrt{\Gamma_1 \Gamma_2}} \geq 1$.

138. The apparatus any of any of embodiments 134 through 137, wherein $D/L_R$ is as large as about 2

139. The apparatus any of any of embodiments 135 through 137, wherein $D/L_R$ is as large as about 3

140. The apparatus any of any of embodiments 136 and 137, wherein $D/L_R$ is as large as about 5

141. The apparatus any of any of embodiment 137 wherein $D/L_R$ is as large as about 8.

142. The apparatus of any of embodiments 1 through 141 , further comprising and electrical or electronic device electrically coupled to the second resonator structure, such that the device can receive energy from the second resonator structure.

143. The apparatus of embodiment 142, wherein the device comprises a robot.

144. The apparatus of embodiment 143,wherein the robot comprises a nano-robot

145. The apparatus of embodiment 144, wherein the device comprises a mobile electronic device.

146. The apparatus of embodiment 145, wherein the mobile electronic device comprises a telephone.

147. The apparatus of embodiment 142, wherein the device comprises a computer.

148. The apparatus of embodiment 147, wherein the computer comprises a laptop computer.

149. The apparatus of embodiment 142, wherein the device comprises a vehicle.

150. The apparatus of embodiment 142, wherein the device comprises a medical device configured to be implanted in a patient.

151. The apparatus of embodiment 150, wherein the device comprises and artificial organ.

152. The apparatus of embodiment 150, wherein the device comprises and implant configured to deliver medicine.

153. The apparatus of any of embodiments 1 through 152, wherein at least one of the first and second resonator structures comprises one of: a dielectric disk, a dielectric sphere, a metallic sphere, a resonant object comprising a metallodielectric photonic crystal, a resonant object comprising a plasmonic material, a capacitively loaded conducting coil, a self resonant conducting wire coil.

154. The apparatus of any of embodiments 1 through 152, wherein the resonant fields are electromagnetic.

155. The apparatus of any of embodiments 1 through 152, wherein the resonant fields are acoustic.

156. The apparatus of any of embodiments 1 through 155, wherein one or more of the resonant fields comprise a whispering gallery mode of one of the resonant structures

157. The apparatus of embodiment 154 wherein the resonant fields are primarily magnetic in the area outside of the resonant objects.

158. The apparatus of embodiment 157, wherein the ratio of the average electric field energy density to average magnetic field energy density at a distance $p$ from the closest resonant object is 0.01 or less.

159. The apparatus of embodiment 157, wherein the ratio of the average electric field energy density to average magnetic field energy density at a distance $p$ from the closest resonant object is 0.1 or less.

160. The apparatus of any of embodiments 157 through 159, wherein *Lc* is the characteristic size of the closest resonant object and *p/Lc* is less than 1.5 .

161. The apparatus of any of embodiments 157 through 159, wherein *Lc* is the characteristic size of the closest resonant obj ect and *plLc* is less than 3.

162. The apparatus of any of embodiments 157 through 159, wherein *Lc* is the characteristic size of the closest resonant obj ect and *p/Lc* is less than 5.

163. The apparatus of any of embodiments 157 through 159, wherein *Lc* is the characteristic size of the closest resonant obj ect and *p/Lc* is less than 7.

164. The apparatus of any of embodiments 157 through 159, wherein *Lc* is the characteristic size of the closest resonant obj ect and *p/Lc* is less than 10.

165. The apparatus of embodiments 1 through 164 wherein at least one of the resonators has a quality factor greater than about 5000.

166. The apparatus of embodiments 1 through 165 wherein at least one of the resonators has a quality factor greater than about 10000.

167. The apparatus of any of embodiments 1 through 166, further comprising:

a third resonator structure configured to transfer energy non-radiatively with one or more of the first and second resonator structures,
wherein the non-radiative energy transfer between the third resonator structure and the one or more of the first and second resonator structures is mediated by a coupling of the resonant field evanescent tail of the one or more of the first and second resonator structures and a resonant field evanescent tail of the third resonator structure.

168. The apparatus of embodiment 167, wherein the third resonator structure is configured to transfer energy to one or more of the first and second resonator structures.

169. The apparatus of embodiment 167, wherein the first resonator structure is configured to receive energy from one or more of the first and second resonator structures.

170. The apparatus of embodiment 167, wherein the first resonator structure is configured to receive energy from one of the first and second resonator structures and transfer energy to the other one of the first and second resonator structures.

171. A method of wireless energy transfer, the method comprising:

providing a first resonator structure; and
transferring energy non-radiatively with a second resonator structure over a distance D greater than a characteristic size $L_1$ of the first resonator structure and greater than a characteristic size $L_2$ of the second resonator structure,
wherein the non-radiative energy transfer is mediated by a coupling of a resonant field evanescent tail of the first resonator structure and a resonant field evanescent tail of the second resonator structure.

172. The method of embodiment 171, wherein

the first resonator structure has a resonant frequency $\omega_1$, a Q-factor $Q_1$, and a resonance width $\Gamma_1$,
the second resonator structure has a resonant frequency $\omega_2$, a Q-factor $Q_2$, and a resonance width $\Gamma_2$ and
the non-radiative transfer has a rate $\kappa$.

173. The method of embodiment 172, wherein the frequencies $\omega_1$ and $\omega_2$ are about within the narrower of the resonant widths $\Gamma_1$ and $\Gamma_2$.

174. An apparatus for use in wireless energy transfer, the apparatus comprising:

A first resonator structure configured to transfer energy non-radiatively with a second resonator structure over a distance $D$ greater than a characteristic width $W_1$ of the first resonator structure and greater than a characteristic size $L_2$ of the second resonator structure,
wherein the non-radiative energy transfer is mediated by a coupling of a resonant field evanescent tail of the first resonator structure and a resonant field evanescent tail of the second resonator structure.

175. The apparatus of embodiment 174, wherein the first resonator structure is configured to transfer energy to the second resonator structure.

176. The apparatus of any of embodiments 174 and 175, further comprising the second resonator structure.

177. The apparatus of embodiment of any of embodiments 174 through 176, wherein
the first resonator structure has a resonant frequency $\omega_1$, a Q-factor $Q_1$, and a resonance width $\Gamma_1$,
the second resonator structure has a resonant frequency $\omega_2$, a Q-factor $Q_2$, and a resonance width $\Gamma_2$ and
the non-radiative transfer has a rate $\kappa$.

178. The apparatus of embodiment 177, wherein the frequencies $\omega_1$, and $\omega_2$ are about within the narrower of the resonant widths $\Gamma_1$ and $\Gamma_2$.

179. The method or apparatus of any of embodiments 173 and 178, wherein the coupling to loss ratio $\dfrac{\kappa}{\sqrt{\Gamma_1\Gamma_2}} > 1$.

180. An apparatus for use in wireless information transfer, the apparatus comprising:

a first resonator structure configured to transfer information by transferring energy non-radiatively with a second resonator structure over a distance $D$ greater than a characteristic size $L_1$ of the first resonator structure and greater than a characteristic size $L_2$ of the second resonator structure,
wherein the non-radiative energy transfer is mediated by a coupling of a resonant field evanescent tail of the first resonator structure and a resonant field evanescent tail of the second resonator structure.

181. The apparatus of embodiment 180, wherein the first resonator structure is configured to transfer energy to the second resonator structure.

182. The apparatus of embodiment 181, wherein the first resonator structure is configured to receive energy from the second resonator structure.

183. The apparatus of any of embodiments 180, 181, and 182, further comprising the second resonator structure.

184. The apparatus of any of embodiments 180, 181, 182, and 183, wherein

the first resonator structure has a resonant frequency $\omega_1$, a Q-factor $Q_1$, and a resonance width $\Gamma_1$,
the second resonator structure has a resonant frequency $\omega_2$, a Q-factor $Q_2$, and a resonance width $\Gamma_2$, and
the non-radiative transfer has a rate $\kappa$.

185. The apparatus of embodiment 184, wherein the frequencies $\omega_1$ and $\omega_2$ are about within the narrower of the resonant widths $\Gamma_1$ and $\Gamma_2$.

186. The apparatus of embodiment 163, wherein the coupling to loss ratio $\dfrac{\kappa}{\sqrt{\Gamma_1\Gamma_2}} > 1$.

187. An apparatus for use in wireless energy transfer, the apparatus comprising:

A first resonator structure configured to transfer energy non-radiatively with a second resonator structure over a distance $D$ greater than a characteristic thickness $T_1$ of the first resonator structure and greater than a char-

acteristic size $L_2$ of the second resonator structure,

wherein the non-radiative energy transfer is mediated by a coupling of a resonant field evanescent tail of the first resonator structure and a resonant field evanescent tail of the second resonator structure.

188. The apparatus of embodiment 174, wherein the first resonator structure is configured to transfer energy to the second resonator structure.

189. The apparatus of any of embodiments 174 and 175, further comprising the second resonator structure.

190. The apparatus of embodiment of any of embodiments 174 through 176, wherein
the first resonator structure has a resonant frequency $\omega_1$, a Q-factor $Q_1$ , and a resonance width $\Gamma_1$,
the second resonator structure has a resonant frequency $\omega_2$, a Q-factor $Q_2$ , and a resonance width $\Gamma_2$ and
the non-radiative transfer has a rate $\kappa$.

191. The apparatus of embodiment 177, wherein the frequencies $\omega_1$ and $\omega_2$ are about within the narrower of the resonant widths $\Gamma_1$ and $\Gamma_2$.

192. The apparatus of embodiment 178, wherein the coupling to loss ratio $\dfrac{\kappa}{\sqrt{\Gamma_1\Gamma_2}} > 1$.

193. The apparatus of embodiment 178, wherein the coupling to loss ratio $\dfrac{\kappa}{\sqrt{\Gamma_1\Gamma_2}} > 5$.

194. An apparatus for use in wireless energy transfer, the apparatus comprising:

a first resonator structure configured to transfer energy non-radiatively with a second resonator structure over a distance $D$ greater than a characteristic size $L_2$ of the second resonator structure,
wherein the non-radiative energy transfer is mediated by a coupling of a resonant field evanescent tail of the first resonator structure and a resonant field evanescent tail of the second resonator structure.

195. The apparatus of embodiment 194, wherein the first resonator structure is configured to transfer energy to the second resonator structure.

196. The apparatus of embodiment 194, wherein the first resonator structure is configured to receive energy from the second resonator structure.

197. The apparatus of any of embodiments 194, 195, and 196, further comprising the second resonator structure.

198. The apparatus of embodiment of any of embodiments 194, 195, 196, and 197, wherein

the first resonator structure has a resonant frequency $\omega_1$, a Q-factor $Q_1$, and a resonance width $\Gamma_1$,
the second resonator structure has a resonant frequency $\omega_2$, a Q-factor $Q_2$, and a resonance width $\Gamma_2$, and
the non-radiative transfer has a rate $\kappa$.

199. The apparatus of embodiment 198, wherein the frequencies $\omega_1$ and $\omega_2$ are about within the narrower of the resonant widths $\Gamma_1$ and $\Gamma_2$.

200. The apparatus of embodiment 199, wherein $Q_1 > 100$ and $Q_2 > 100$.

201. The apparatus of embodiment 200, wherein $Q_1 > 200$ and $Q_2 > 200$.

202. The apparatus of embodiment 201, wherein $Q_1 > 500$ and $Q_2 > 500$.

203. The apparatus of embodiment 202, wherein $Q_1 > 1000$ and $Q_2 > 1000$.

204. The apparatus of embodiment 200, wherein $Q_1 > 200$ or $Q_2 > 200$

205. The apparatus of embodiment 200, wherein $Q_1 > 500$ or $Q_2 > 500$.

206. The apparatus of embodiment 200, wherein $Q_1 > 1000$ or $Q_2 > 1000$.

207. The apparatus of any of embodiments 199 through 206, wherein the coupling to loss ratio $\dfrac{\kappa}{\sqrt{\Gamma_1 \Gamma_2}} > 0.5$.

208. The apparatus of any of embodiments 199 through 206, wherein the coupling to loss ratio $\dfrac{\kappa}{\sqrt{\Gamma_1 \Gamma_2}} > 1$.

209. The apparatus of any of embodiments 199 through 206, wherein the coupling to loss ratio $\dfrac{\kappa}{\sqrt{\Gamma_1 \Gamma_2}} > 2$.

210. The apparatus of any of embodiments 199 through 206, wherein the coupling to loss ratio $\dfrac{\kappa}{\sqrt{\Gamma_1 \Gamma_2}} > 5$.

211. The apparatus of any of embodiments 194 through 210, wherein $D/L_2$ is as large as 2.

212. The apparatus of any of embodiments 194 through 210, wherein $D/L_2$ is as large as 3.

213. The apparatus of any of embodiments 194 through 210, wherein $D/L_2$ is as large as 5.

214. The apparatus of any of embodiments 194 through 210, wherein $D/L_2$ is as large as 7.

215. The apparatus of any of embodiments 194 through 210, wherein $D/L_2$ is as large as 10.

216. The apparatus of any of embodiments 199 through 205, wherein $Q_1 > 1000$, $Q_2 > 1000$, and the coupling to loss ratio $\dfrac{\kappa}{\sqrt{\Gamma_1 \Gamma_2}} > 10$.

217. The apparatus of any of embodiments 199 through 205, wherein $Q_1 > 1000$, $Q_2 > 1000$, and coupling to loss ratio $\dfrac{\kappa}{\sqrt{\Gamma_1 \Gamma_2}} > 25$.

218. The apparatus of any of embodiments 199 through 205, wherein $Q_1 > 1000$, $Q_2 > 1000$, and the coupling to loss ratio $\dfrac{\kappa}{\sqrt{\Gamma_1 \Gamma_2}} > 40$.

219. The apparatus of any of embodiments 216 through 218, wherein $D/L_2$ is as large as 3.

220. The apparatus of any of embodiments 216 through 217, wherein $D/L_2$ is as large as 7.

221. The apparatus of embodiment 216, wherein $D/L_2$ is as large as 10.

222. The apparatus of any of embodiments 194 through 221, wherein the energy transfer operates with an efficiency $\eta_w$ greater than about 1%.

223. The apparatus of any of embodiments 194 through 221, wherein the energy transfer operates with an efficiency

$\eta_w$ greater than about 10%.

224. The apparatus of any of embodiments 194 through 221, wherein the energy transfer operates with an efficiency $\eta_w$ greater than about 20%.

225. The apparatus of any of embodiments 194 through 221, wherein the energy transfer operates with an efficiency $\eta_w$ greater than about 30%.

226. The apparatus of any of embodiments 194 through 221, wherein the energy transfer operates with an efficiency $\eta_w$ greater than about 80%.

227. The apparatus of any of embodiments 194 through 221, wherein the energy transfer operates with a radiation loss $\eta_{rad}$ less that about 10%.

228. The apparatus of any of embodiments 199 through 221, wherein the energy transfer operates with a radiation loss $\eta_{rad}$ less that about 10%, and the coupling to loss ratio $\dfrac{\kappa}{\sqrt{\Gamma_1 \Gamma_2}} \geq 0.1$.

229. The apparatus of any of embodiments 194 through 221, wherein the wherein the energy transfer operates with a radiation loss $\eta_{rad}$ less that about 1%.

230. The apparatus any of embodiments 194 through 221, wherein the wherein the energy transfer operates with a radiation loss $\eta_{rad}$ less that about 1%, and the coupling to loss ratio $\dfrac{\kappa}{\sqrt{\Gamma_1 \Gamma_2}} \geq 1$.

231. The apparatus of any of embodiments 194 through 221, wherein, in the presence of a human at distance of more than 3cm from the surface of either resonant object, the energy transfer operates with a loss to the human $\eta_h$ of less than about 1%.

232. The apparatus of any of embodiments 194 through 221, wherein, in the presence of a human at distance of more than 3cm from the surface of either resonant obj ect, the energy transfer operates with a loss to the human $\eta_h$ of less than about 1% and the coupling to loss ratio $\dfrac{\kappa}{\sqrt{\Gamma_1 \Gamma_2}} \geq 1$.

233. The apparatus of any of embodiments 194 through 221, wherein, in the presence of a human at distance of more than 10cm from the surface of either resonant object, the energy transfer operates with a loss to the human $\eta_h$ of less than about 0.2%.

234. The apparatus of any of embodiments 199 through 221, wherein, in the presence of a human at distance of more than 10cm from the surface of either resonant obj ect, the energy transfer operates with a loss to the human $\eta_h$ of less than about 0.2% and the coupling to loss ratio $, \dfrac{\kappa}{\sqrt{\Gamma_1 \Gamma_2}} \geq 1$.

235. The apparatus of any of embodiments 194 through 234, wherein, during operation, a power source coupled to the first or second resonator structure drives the resonator structure at a frequency *f*.

236. The apparatus of embodiments 235, further comprising the power source.

237. The apparatus of any of embodiments 235 through 236, wherein *f* is about the optimum efficiency frequency.

238. The apparatus of any of embodiments 235 through 236, wherein *f* is about 50 GHz or less.

239. The apparatus of any of embodiments 235 through 236, wherein $f$ is about 1 GHz or less.

240. The apparatus of any of embodiments 235 through 236, wherein $f$ is about 100 MHz or less.

241. The apparatus of any of embodiments 235 through 236, wherein $f$ is about 10 MHz or less.

242. The apparatus of any of embodiments 235 through 236, wherein $f$ is about 1 MHz or less.

243. The apparatus of any of embodiments 235 through 236, wherein $f$ is about 100 KHz or less.

244. The apparatus of any of embodiments 235 through 236, wherein $f$ is about 10 kHz or less.

245. The apparatus of any of embodiments 235 through 236, wherein $f$ is about 50 GHz or greater.

246. The apparatus of any of embodiments 235 through 236, wherein $f$ is about 1 GHz or greater.

247. The apparatus of any of embodiments 235 through 236, wherein $f$ is about 100 MHz or greater.

248. The apparatus of any of embodiments 235 through 236, wherein $f$ is about 10 MHz or greater.

249. The apparatus of any of embodiments 235 through 236, wherein $f$ is about 1 MHz or greater.

250. The apparatus of any of embodiments 235 through 236, wherein $f$ is about 100 kHz. or greater.

251. The apparatus of any of embodiments 235 through 236, wherein $f$ is about 10 kHz or greater.

252. The apparatus of any of embodiments 194 through 251, wherein, during operation, one of the resonator structures receives a usable power $P_w$ from the other resonator structure.

253. The apparatus of embodiment 252, wherein $P_w$ is greater than about 0.01 Watt.

254. The apparatus of embodiment 252, wherein $P_w$ is greater than about 0.1 Watt.

255. The apparatus of embodiment 252, wherein $P_w$ is greater than about 1 Watt.

256. The apparatus of embodiment 252, wherein $P_w$ is greater than about 10 Watt.

257. The apparatus of any of embodiments 199 through 256, wherein $Q_\kappa = \omega/2\kappa$ is less than about 50.

258. The apparatus of any of embodiments 199 through 256, wherein $Q_\kappa = \omega/2\kappa$ is less than about 200.

259. The apparatus of any of embodiments 199 through 256, wherein $Q_\kappa = \omega/2\kappa$ is less than about 500.

260. The apparatus of any of embodiments 199 through 256, wherein $Q_\kappa = \omega/2\kappa$ is less than about 1000.

261. The apparatus of any of embodiments 257 through 260, wherein $D/L_2$ is as large as 3.

262. The apparatus of any of embodiments 257 through 260, wherein $D/L_2$ is as large as 5.

263. The apparatus of any of embodiments 257 through 260, wherein $D/L_2$ is as large as 7.

264. The apparatus of any of embodiments 257 through 260, wherein $D/L_2$ is as large as 10.

265. The apparatus of any of embodiments 193 through 264, wherein one of the first and second resonator structures comprise capacitively loaded conductive coils.

266. The apparatus of embodiment 265, wherein both of the first and second resonator structures comprise capacitively loaded conductive coils.

267. The apparatus of any of embodiments 265 and 266, wherein, during operation, one of the resonator structures receives a usable power $P_w$ from the other resonator structure, an electrical current $I_s$ flows in the resonator structure which is transferring energy to the other resonant structure, and the ratio $\dfrac{I_s}{\sqrt{P_w}}$ is less than about 5 $Amps/\sqrt{Watts}$ .

268. The apparatus of any of embodiments 265 and 266, wherein, during operation, one of the resonator structures receives a usable power $P_w$ from the other resonator structure, an electrical current $I_s$ flows in the resonator structure which is transferring energy to the other resonant structure, and the ratio $\dfrac{I_s}{\sqrt{P_w}}$ is less than about 2 $Amps/\sqrt{Watts}$ .

269. The apparatus of any of embodiments 265 and 266, wherein, during operation, one of the resonator structures receives a usable power $P_w$ from the other resonator structure, a voltage difference $V_s$ appears across the capacitive load of the first resonator structure $V_s$, and the ratio $\dfrac{V_s}{\sqrt{P_w}}$ is less than about 2000 $Volts/\sqrt{Watts}$ .

270. The apparatus of any of embodiments 265 and 266, wherein, during operation, one of the resonator structures receives a usable power $P_w$ from the other resonator structure, a voltage difference $V_s$ appears across the capacitive load of the first resonator structure $V_s$ and the ratio $\dfrac{V_s}{\sqrt{P_w}}$ is less than about 4000 $Volts/\sqrt{Watts}$ .

271. The apparatus of any of embodiments 265 and 266, wherein both of the first and second resonator structures comprise capacitively loaded conductive coils, and $Q_1 > 200$ and $Q_2 > 200$.

272. The apparatus of embodiment 271, wherein the characteristic size $L_R$ of the resonator structure receiving energy from the other resonator structure is less than about 1 cm and the width of the conductive coil of said object is less than about 1mm, and, during operation, a power source coupled to the first or second resonator structure drives the resonator structure at a frequency $f$.

273. The apparatus of embodiment 272, wherein $f$ is about 380MHz.

274. The apparatus of any of embodiments 272 and 273, wherein the coupling to loss ratio $\dfrac{\kappa}{\sqrt{\Gamma_1 \Gamma_2}} \geq 14.9$ .

275. The apparatus of any of embodiments 272 and 273, wherein the coupling to loss ratio $\dfrac{\kappa}{\sqrt{\Gamma_1 \Gamma_2}} \geq 3.2$ .

276. The apparatus of any of embodiments 272 and 273, wherein the coupling to loss ratio $\dfrac{\kappa}{\sqrt{\Gamma_1 \Gamma_2}} \geq 1.2$ .

277. The apparatus of any of embodiments 272 and 273, wherein the coupling to loss ratio $\dfrac{\kappa}{\sqrt{\Gamma_1 \Gamma_2}} \geq 0.4$ .

278. The apparatus of embodiment 271, wherein the characteristic size of the resonator structure receiving energy from the other resonator structure $L_R$ is less than about 10 cm and the width of the conductive coil of said object is less than about 2mm, and, during operation, a power source coupled to the first or second resonator structure drives the resonator structure at a frequency $f$.

279. The apparatus of embodiment 278, wherein $f$ is about 43 MHz.

280. The apparatus of any of embodiments 278 and 279, wherein the coupling to loss ratio $\frac{\kappa}{\sqrt{\Gamma_1 \Gamma_2}} \geq 15.9$.

281. The apparatus of any of embodiments 278 and 279, wherein the coupling to loss ratio $\frac{\kappa}{\sqrt{\Gamma_1 \Gamma_2}} \geq 4.3$.

282. The apparatus of any of embodiments 278 and 279, wherein the coupling to loss ratio $\frac{\kappa}{\sqrt{\Gamma_1 \Gamma_2}} \geq 1.8$.

283. The apparatus of any of embodiments 278 and 279, wherein the coupling to loss ratio $\frac{\kappa}{\sqrt{\Gamma_1 \Gamma_2}} \geq 0.7$.

284. The apparatus of embodiment 271, wherein the characteristic size $L_R$ of the resonator structure receiving energy from the other resonator structure is less than about 30 cm and the width of the conductive coil of said object is less than about 2cm, and, during operation, a power source coupled to the first or second resonator structure drives the resonator structure at a frequency $f$.

285. The apparatus of embodiment 284, wherein $f$ is about 9 MHz..

286. The apparatus of any of embodiments 284 and 285, wherein the coupling to loss ratio $\frac{\kappa}{\sqrt{\Gamma_1 \Gamma_2}} \geq 67.4$.

287. The apparatus of any of embodiments 284 and 285, wherein the coupling to loss ratio $\frac{\kappa}{\sqrt{\Gamma_1 \Gamma_2}} \geq 17.8$.

288. The apparatus of any of embodiments 284 and 285, wherein the coupling to loss ratio $\frac{\kappa}{\sqrt{\Gamma_1 \Gamma_2}} \geq 7.1$.

289. The apparatus of any of embodiments 284 and 285, wherein the coupling to loss ratio $\frac{\kappa}{\sqrt{\Gamma_1 \Gamma_2}} \geq 2.7$.

290. The apparatus of embodiment 271, wherein the characteristic size of the resonator structure receiving energy from the other resonator structure $L_R$ is less than about 30 cm and the width of the conductive coil of said object is less than about 2mm, and, during operation, a power source coupled to the first or second resonator structure drives the resonator structure at a frequency $f$.

291. The apparatus of embodiment 290, wherein $f$ is about 17 MHz.

292. The apparatus of any of embodiments 290 and 291, wherein the coupling to loss ratio $\frac{\kappa}{\sqrt{\Gamma_1 \Gamma_2}} \geq 6.3$.

293. The apparatus of any of embodiments 290 and 291, wherein the coupling to loss ratio $\frac{\kappa}{\sqrt{\Gamma_1 \Gamma_2}} \geq 1.3$.

294. The apparatus of any of embodiments 290 and 291, wherein the coupling to loss ratio $\dfrac{\kappa}{\sqrt{\Gamma_1 \Gamma_2}} \geq 0.5$.

295. The apparatus of any of embodiments 290 and 291, wherein the coupling to loss ratio $\dfrac{\kappa}{\sqrt{\Gamma_1 \Gamma_2}} \geq 0.2$.

296. The apparatus of embodiment 271, wherein the characteristic size $L_R$ of the resonator structure receiving energy from the other resonator structure is less than about 1m, and the width of the conductive coil of said object is less than about 2mm, and, during operation, a power source coupled to the first or second resonator structure drives the resonator structure at a frequency $f$.

297. The apparatus of embodiment 296, wherein $f$ is about 5MHz.

298. The apparatus of any of embodiments 296 and 297, wherein the coupling to loss ratio $\dfrac{\kappa}{\sqrt{\Gamma_1 \Gamma_2}} \geq 6.8$.

299. The apparatus of any of embodiments 296 and 297, wherein the coupling to loss ratio $\dfrac{\kappa}{\sqrt{\Gamma_1 \Gamma_2}} \geq 1.4$.

300. The apparatus of any of embodiments 296 and 297, wherein the coupling to loss ratio $\dfrac{\kappa}{\sqrt{\Gamma_1 \Gamma_2}} \geq 0.5$.

301. The apparatus of any of embodiments 296 and 297, wherein the coupling to loss ratio $\dfrac{\kappa}{\sqrt{\Gamma_1 \Gamma_2}} \geq 0.2$.

302. The apparatus any of any of embodiments 274 through 277, 280 through 283, 286 through 289, 292 through 295, and 298 through 301, wherein $D/L_R$ is as large as about 3.

303. The apparatus any of any of embodiments 275 through 277, 281 through 283, 287 through 289, 293 through 295, and 299 through 301, wherein $D/L_R$ is as large as about 5.

304. The apparatus any of any of embodiments 276 through 277, 282 through 283, 288 through 289, 294 through 295, and 300 through 301, wherein $D/L_R$ is as large as about 7.

305. The apparatus any of any of embodiments 277, 283, 289, 295, and 301 wherein $D/L_R$ is as large as about 10.

306. The apparatus of embodiment 199, wherein both of the first and second resonator structures comprise dielectric disks.

307. The apparatus of embodiment 306, wherein the characteristic size of the resonator structure receiving energy from the other resonator structure is $L_R$ and the real part of the permittivity of said resonator structure $\varepsilon$ is less than about 150.

308. The apparatus of embodiment 306, wherein the coupling to loss ratio $\dfrac{\kappa}{\sqrt{\Gamma_1 \Gamma_2}} \geq 42.4$.

309. The apparatus of embodiment 306, wherein the coupling to loss ratio $\dfrac{\kappa}{\sqrt{\Gamma_1 \Gamma_2}} \geq 6.5$.

310. The apparatus of embodiment 306, wherein the coupling to loss ratio $\dfrac{\kappa}{\sqrt{\Gamma_1 \Gamma_2}} \geq 2.3$.

311. The apparatus of embodiment 306, the coupling to loss ratio $\dfrac{\kappa}{\sqrt{\Gamma_1\Gamma_2}} \geq 0.5$ .

312. The apparatus of embodiment 306, wherein the characteristic size $L_R$ of the resonator structure receiving energy from the other resonator structure is and the real part of the permittivity of said resonator structure $\varepsilon$ is less than about 70.

313. The apparatus of embodiment 312, wherein the coupling to loss ratio $\dfrac{\kappa}{\sqrt{\Gamma_1\Gamma_2}} \geq 30.9$ .

314. The apparatus of embodiment 312, wherein the coupling to loss ratio $\dfrac{\kappa}{\sqrt{\Gamma_1\Gamma_2}} \geq 2.3$ .

315. The apparatus of embodiment 312, wherein the coupling to loss ratio $\dfrac{\kappa}{\sqrt{\Gamma_1\Gamma_2}} \geq 0.5$ .

316. The apparatus of any of embodiments 309 through 311, and 314 through 315, wherein $D/L_R$ is as large as about 3.

317. The apparatus of any of embodiments 310 through 311, and 315, wherein $D/L_R$ is as large as about 5.

318. The apparatus of any of embodiments 310 through 311 wherein $D/L_R$ is as large as about 7.

319. The apparatus of any of embodiments 306 through 318, wherein the real part of the permittivity of the resonator structure configured to receiving energy from the other resonator structure $\varepsilon$ is less than about 65.

320. The apparatus of any of embodiments 194 through 264, wherein one of the first and second resonator structures comprise self resonant conducting wire coil.

321. The apparatus of embodiment 320, wherein both of the first and second resonator structures comprise self resonant conducting wire coils.

322. The apparatus of any of embodiments 320 and 321, wherein one or more of the self resonant conductive wire coils comprise a wire of length $l$ and cross section radius wound into a helical coil of radius $r$, height $h$ and number of turns $N$.

323. The apparatus of embodiment 322, wherein $N = \sqrt{l^2 - h^2}\,/\,2\pi r$

324. The apparatus of any of embodiments 322 through 323, wherein both of the first and second resonator structures comprise self resonant conducting wire coils , and $Q_1 > 200$ and $Q_2 > 200$.

325. The apparatus of embodiment 324, wherein, for each resonant structure $r$ is about 30cm, $h$ is about 20cm, $a$ is about 3mm and $N$ is about 5.25, and, during operation, a power source coupled to the first or second resonator structure drives the resonator structure at a frequency $f$.

326. The apparatus of embodiment 325, wherein $f$ is about 10.6 MHz.

327. The apparatus of any of embodiments 272 and 273, wherein the coupling to loss ratio $\dfrac{\kappa}{\sqrt{\Gamma_1\Gamma_2}} \geq 40$ .

328. The apparatus of any of embodiments 272 and 273, wherein the coupling to loss ratio $\dfrac{\kappa}{\sqrt{\Gamma_1\Gamma_2}} \geq 15$ .

329. The apparatus of any of embodiments 272 and 273, wherein the coupling to loss ratio $\dfrac{\kappa}{\sqrt{\Gamma_1\Gamma_2}} \geq 5$ .

330. The apparatus of any of embodiments 272 and 273, wherein the coupling to loss ratio $\dfrac{\kappa}{\sqrt{\Gamma_1\Gamma_2}} \geq 1$ .

331. The apparatus any of any of embodiments 327 through 330, wherein $D/L_R$ is as large as about 2

332. The apparatus any of any of embodiments 328 through 330, wherein $D/L_R$ is as large as about 3

333. The apparatus any of any of embodiments 329 and 330, wherein $D/L_R$ is as large as about 5

334. The apparatus any of any of embodiment 330 wherein $D/L_R$ is as large as about 8.

335. The apparatus of any of embodiments 194 through 334 , further comprising and electrical or electronic device electrically coupled to the second resonator structure, such that the device can receive energy from the second resonator structure.

336. The apparatus of embodiment 335, wherein the device comprises a robot.

337. The apparatus of embodiment 336,wherein the robot comprises a nano-robot

338. The apparatus of embodiment 337, wherein the device comprises a mobile electronic device.

339. The apparatus of embodiment 338, wherein the mobile electronic device comprises a telephone.

340. The apparatus of embodiment 335, wherein the device comprises a computer.

341. The apparatus of embodiment 340, wherein the computer comprises a laptop computer.

342. The apparatus of embodiment 335, wherein the device comprises a vehicle.

343. The apparatus of embodiment 142, wherein the device comprises a medical device configured to be implanted in a patient.

344. The apparatus of embodiment 343, wherein the device comprises and artificial organ.

345. The apparatus of embodiment 343, wherein the device comprises and implant configured to deliver medicine.

346. The apparatus of any of embodiments 194 through 345, wherein at least one of the first and second resonator structures comprises one of: a dielectric disk, a dielectric sphere, a metallic sphere, a resonant object comprising a metallodielectric photonic crystal, a resonant object comprising a plasmonic material, a capacitively loaded conducting coil, a self resonant conducting wire coil, a metallic material, a dielectric material.

347. The apparatus of any of embodiments 194 through 345, wherein the resonant fields are electromagnetic.

348. The apparatus of any of embodiments 194 through 345, wherein the resonant fields are acoustic.

349. The apparatus of any of embodiments 194 through 348, wherein one or more of the resonant fields comprise a whispering gallery mode of one of the resonant structures

350. The apparatus of embodiment 347 wherein the resonant fields are primarily magnetic in the area outside of the resonant objects.

351. The apparatus of embodiment 350, wherein the ratio of the average electric field energy to average magnetic filed energy at a distance $p$ from the closest resonant object is 0.01 or less.

352. The apparatus of embodiment 350, wherein the ratio of the average electric field energy to average magnetic filed energy at a distance p from the closest resonant object is 0.1 or less.

353. The apparatus of any of embodiments 350 through 352, wherein $Lc$ is the characteristic size of the closest resonant object and $p/Lc$ is less than 1.5 .

354. The apparatus of any of embodiments 350 through 352, wherein $Lc$ is the characteristic size of the closest resonant obj ect and $p/Lc$ is less than 3.

355. The apparatus of any of embodiments 350 through 352, wherein $Lc$ is the characteristic size of the closest resonant obj ect and $p/Lc$ is less than 5.

356. The apparatus of any of embodiments 350 through 352, wherein $Lc$ is the characteristic size of the closest resonant obj ect and $p/Lc$ is less than 7.

357. The apparatus of any of embodiments 350 through 352, wherein $Lc$ is the characteristic size of the closest resonant obj ect and $p/Lc$ is less than 10.

358. The apparatus of embodiments 194 through 357 wherein at least one of the resonators has a quality factor greater than about 5000.

359. The apparatus of embodiments 194 through 358 wherein at least one of the resonators has a quality factor greater than about 10000.

360. The apparatus of any of embodiments 194 through 359, further comprising:

a third resonator structure configured to transfer energy non-radiatively with one or more of the first and second resonator structures,
wherein the non-radiative energy transfer between the third resonator structure and the one or more of the first and second resonator structures is mediated by a coupling of the resonant field evanescent tail of the one or more of the first and second resonator structures and a resonant field evanescent tail of the third resonator structure.

361. The apparatus of embodiment 360, wherein the third resonator structure is configured to transfer energy to one or more of the first and second resonator structures.

362. The apparatus of embodiment 360, wherein the first resonator structure is configured to receive energy from one or more of the first and second resonator structures.

363. The apparatus of embodiment 360, wherein the first resonator structure is configured to receive energy from one of the first and second resonator structures and transfer energy to the other one of the first and second resonator structures.

364. The apparatus of any of embodiments 1 through 170 and 176 through 363, further comprising a feedback mechanism for maintaining the resonant frequency of one or more of the resonant objects.

365. The apparatus of embodiment 364, wherein the feedback mechanism comprises a oscillator with a fixed frequency and is configured to adjust the resonant frequency of the one or more resonant objects to be about equal to the fixed frequency.

366. The apparatus of embodiment 364, where the feedback mechanism is configured to monitor an efficiency of the energy transfer, and adjust the resonant frequency of the one or more resonant objects to maximize the efficiency.

A number of implementations have been described. Nevertheless, it will be understood that various modifications may be made without departing from the spirit and scope of the following claims. Accordingly, other implementations are within the scope of the following claims:

**Claims**

1.  An apparatus for use in wireless energy transfer, the apparatus comprising:

    a first resonator structure configured to transfer energy non-radiatively with a second resonator structure over a distance $D$ greater than a characteristic size $L_1$ of the first resonator structure and greater than a characteristic size $L_2$ of the second resonator structure,

    wherein the non-radiative energy transfer is mediated by a coupling of a resonant field evanescent tail of the first resonator structure and a resonant field evanescent tail of the second resonator structure,
    further comprising the second resonator structure, and
    further comprising a third resonator structure configured to transfer energy non-radiatively with one or more of the first and second resonator structures,
    wherein the non-radiative energy transfer between the third resonator structure and the one or more of the first and second resonator structures is mediated by a coupling of the resonant field evanescent tail of the one or more of the first and second resonator structures and a resonant field evanescent tail of the third resonator structure.

2.  The apparatus of claim 1, wherein the third resonator structure is configured to transfer energy to one or more of the first and second resonator structures.

3.  The apparatus of claim 1, wherein the first resonator structure is configured to receive energy from one or more of the first and second resonator structures.

4.  The apparatus of claim 1, wherein the third resonator structure is configured to receive energy from one of the first and second resonator structures and transfer energy to the other one of the first and second resonator structures.

5.  The apparatus of any of claims 1 through 4, wherein
    the first resonator structure has a resonant frequency $\omega_1$, a Q-factor $Q_1$, and a resonance width $\Gamma_1$,
    the second resonator structure has a resonant frequency $\omega_2$, a Q-factor $Q_2$, and a resonance width $\Gamma_2$ and
    the non-radiative transfer has a rate $\kappa$.

6.  The apparatus of claim 5, wherein $Q_1 > 100$ and $Q_2 > 100$.

7.  The apparatus of any of claims 1 through 6, wherein $D/L_2$ is as large as 2.

8.  The apparatus of any of claims 1 through 7, wherein $D/L_2$ is as large as 3.

9.  The apparatus of any of claims 1 through 8, wherein $D/L_2$ is as large as 5.

10. The apparatus of any of claims 1 through 9, wherein the energy transfer operates with an efficiency $\eta_w$ greater than about 10%.

11. The apparatus of any of claims 1 through 10, wherein the energy transfer operates with an efficiency $\eta_w$ greater than about 20%.

12. The apparatus of any of claims 1 through 11, further comprising a power source coupled to the first resonator structure and configured to drive the resonator structure at a frequency $f$.

13. The apparatus of claim 12, wherein $f$ is about 100 MHz or less.

14. The apparatus of claim 12, wherein $f$ is about 10 kHz or greater.

15. The apparatus of any of claims 1 through 14, wherein, during operation, one of the resonator structures receives a usable power $P_w$ from the other resonator structure that is greater than about 1 Watt.

16. The apparatus of claim 15, wherein $P_w$ is greater than about 10 Watt.

17. The apparatus of any of claims 1 through 16, further comprising an electrical or electronic device electrically coupled to the second resonator structure, such that the device can receive energy from the second resonator structure.

18. The apparatus of claim 17, wherein the device comprises a mobile electronic device.

19. The apparatus of claim 17, wherein the device comprises a vehicle.

20. The apparatus of any of claims 1 through 19, further comprising a feedback mechanism for maintaining the resonant frequency of one or more of the resonant objects.

EP 2 418 755 A2

Source

Drain

to power
supply

to power
consumption

$D$

$L_1$

$L_2$

FIG. 1

Fig. 2

FIG. 3

FIG. 4

FIG. 5

FIG. 6

FIG. 7

FIG. 8a

Frequency Adjustor → Device Object → Load

Efficiency Monitor

FIG. 8b

EP 2 418 755 A2

FIG 10

## FIG 9a

(a)

## FIG 9b

(b)

EP 2 418 755 A2

| disk with "human" | $D_h/r$ | $Q^{abs}_{c c-h}$ | $Q^{rad}_{c[h]}$ | $Q_{c[h]}$ |
|---|---|---|---|---|
| **Re{ε}=147.7, m=2** | 3 | 230 | 981 | 183 |
| $\lambda/r \approx 20$ | 5 | 2917 | 1984 | 1057 |
| $Q^{abs}_c \approx 10096$ | 7 | 11573 | 2230 | 1578 |
| | 10 | 41496 | 2201 | 1732 |
| **Re{ε}=65.6, m=3** | 3 | 1827 | 6197 | 1238 |
| $\lambda/r \approx 10$ | 5 | **58431** | **11808** | **4978** |
| $Q^{abs}_c \approx 10096$ | 7 | 249748 | 9931 | 4908 |
| | 10 | 867552 | 9078 | 4754 |

| disk with "wall" | $D_w/r$ | $Q^{abs}_{c c-w}$ | $Q^{rad}_{c[w]}$ | $Q_{c[w]}$ |
|---|---|---|---|---|
| **Re{ε}=147.7, m=2** | 3 | 16725 | 1235 | 1033 |
| $\lambda/r \approx 20$ | **5** | **31659** | **1922** | **1536** |
| $Q^{abs}_c \approx 10098$ | 7 | 49440 | 2389 | 1859 |
| | 10 | 82839 | 2140 | 1729 |
| Re{ε}=65.6, m=3 | 3 | 53154 | 6228 | 3592 |
| $\lambda/r \approx 10$ | 5 | 127402 | 10988 | 5053 |
| $Q^{abs}_c \approx 10097$ | 7 | 159192 | 10168 | 4910 |
| | 10 | 191506 | 9510 | 4775 |

| two disks with "human" and "wall" | $D/r$ | $Q_{c-h}^{abs}$ | $Q_{c-w}^{abs}$ | $Q_{o[hw]}^{rad}$ | $Q_{d[hw]} = \omega/2\Gamma_{d[hw]}$ | $\omega/2\kappa_{[hw]}$ | $\kappa_{[hw]}/\Gamma_{d[hw]}$ |
|---|---|---|---|---|---|---|---|
| Re{ε}=147.7, m=2 | 3 | 3300 | 12774 | 536 | 426 | 48 | 8.8 |
| $\lambda/r \approx 20$ | 5 | 5719 | 26333 | 1600 | 1068 | 322 | 3.3 |
| $Q_c^{abs} \approx 10100$ | 7 | 13248 | 50161 | 3542 | 2097 | 973 | 2.2 |
| | 10 | 18447 | 68460 | 3624 | 2254 | 1768 | 1.3 |
| Re{ε}=65.6, m=3 | 3 | 2088 | 36661 | 6764 | 1328 | 141 | 9.4 |
| $\lambda/r \approx 10$ | 5 | 72137 | 90289 | 11945 | 4815 | 2114 | 2.3 |
| $Q_c^{abs} \approx 10100$ | 7 | 237822 | 129094 | 12261 | 5194 | 8307 | 0.6 |

FIG. 9c

FIG. 11

**Figure 12**. Efficiency, total (loaded) device Q, and source and device currents, voltages and radiated powers , normalized to 1Watt of output working power, as functions of frequency for a particular choice of source and device loop dimensions, $wp$ and $N_s$ and different choices of $N_d$=1,2,3,4,5,6,10 (red, green, blue, magenta, yellow, cyan, black respectively)

FIG. 12

Efficiency, total (loaded) device Q, and source and device currents, voltages and radiated powers (normalized to 1Watt of output working power) as functions of frequency and *wp* for a particular choice of source and device loop dimensions, and number of turns *Ns* and *Nd*.

FIG. 13

FIG. 14

Comparison of experimental and theoretical values for $\kappa$ as a function of the separation between the source and device coils.

FIG. 15

Comparison of experimental and theoretical values for the parameter $\kappa/\Gamma$ as a function of the separation between the two coils. The theory values are obtained by using the theoretically obtained $\kappa$ and the experimentally measured $\Gamma$. The shaded area represents the spread in the theoretical $\kappa/\Gamma$ due to the $\sim 5\%$ uncertainty in $Q$.

FIG.16

FIG. 17

EP 2 418 755 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 90838307 P
- US 48107706 A
- US 69844205 P

### Non-patent literature cited in the description

- **HAUS, H. A.** Waves and Fields in Optoelectronics. Prentice-Hall, 1984
- **BALANIS, C. A.** Antenna Theory: Analysis and Design. Wiley, 2005
- Electromagnetic wave propagation on helical conductors. **S. SENSIPER.** PhD Thesis. Massachusetts Institute of Technology, 1951
- **JACKSON, J. D.** *Classical Electrodynamics,* 1999